# EUROPEAN PATENT APPLICATION

(11) **EP 3 952 442 A1**
(43) Date of publication of application: **09.02.2022**
(21) Application number: 20779752.3
(22) Date of filing: 03.02.2020
(51) Int. Cl.: H04W 36/00

(54) **METHOD FOR SELECTING LOCATION MANAGEMENT FUNCTION AND DEVICE**

(30) Priority: 27.03.2019 CN 201910239583
(71) Applicant: Datang Mobile Communications Equipment Co., Ltd., Beijing 100085 (CN)
(72) Inventor: NI, Chunlin, Beijing 100085 (CN); FU, Jing, Beijing 100085 (CN); QUAN, Haiyang, Beijing 100085 (CN); ZHANG, Dajun, Beijing 100085 (CN)
(74) Representative: Nony
(86) International application number: PCT/CN2020/074229
(87) International publication number: WO 2020/192274

(57) **Abstract**

Disclosed in the present application are a method for selecting a location management function and a device, which are used to ensure that, in a 5G location network architecture, a UE can quickly redirect to a location management function (LMF) entity after moving so as to meet high-precision and low-latency location requirements of the 5G location network architecture. The method includes: determining to trigger the updating of an LMF entity, and executing a process of selecting a new LMF entity; and executing a process of redirecting to the new LMF entity.

## Description

### Cross-reference to related applications

The present application claims priority to the Chinese patent application No. 201910239583.6 filed to the China Patent Office on March 27, 2019 and entitled "METHOD AND DEVICE FOR SELECTING LOCATION MANAGEMENT FUNCTION", the entire contents of which are incorporated herein by reference.

### Field

The present application relates to the mobile communication technology, in particular to a method and device for selecting a location management function (LMF).

### Background

Location based services/localization services (LBS/LCS) are services for obtaining terminal location information through a radio communication network or other localization systems and then providing all kinds of information related to a location for a user in combination with a geographical information system. Up to time now, an outdoor localization technology based on a global navigation satellite system (GNSS) has been widely applied to various fields. In addition, a high-precision localization technology based on a 4G mobile communication network also fills in the blank of localization of the navigation satellite system effectively.

At present, the mobile communication network has entered into the 5G technology age. Based on a 5G location network architecture which is more concise and more efficient, compared with a 4G long term evolution (LTE) location network architecture, the 5G location network architecture has location requirements for higher precision and lower latency, and an LMF is located on a radio access network (RAN) local or a core network (CN) side.

At present, an LMF entity is located at the CN side, and when connected-state user equipment (UE) moves crossing RAN nodes under the same access and mobility management function (AMF) entity, the LMF serving for the UE may not change.

Therefore, there has been no method for reselecting an LMF after the connected-state UE moves.

### Summary

The present application provides a method and device for selecting an LMF, used to ensure that, in a 5G location network architecture, the UE can quickly redirect to an LMF entity after moving so as to meet high-precision and low-latency location requirements of the 5G location network architecture.

In a first aspect, the present application provides a method for selecting an LMF, applied to an AMF entity/mobility management entity (MME) corresponding to a terminal in a process of moving across nodes, and including: determining to trigger updating of an LMF entity, and executing a process of selecting a new LMF entity; and executing a process of redirecting to the new LMF entity.

According to the method provided by the embodiment of the present application, based on the 5G location network architecture, the LMF may be located in a core network (5G Core, 5GC) or a local location management function (L-LMF) of an RAN. When a user terminal UE has a location requirement, an appropriate L-LMF entity or core network location management function (CN-LMF) entity will be selected; and when a connected-state UE moves across nodes, it is determined to trigger updating of the LMF entity, and the AMF entity/MME decides to redirect to the new LMF entity. Therefore, the method provided by the present application can solve a method of how to select the LMF after the connected-state UE moves across nodes, so as to ensure that, based on an RAN local location network architecture in the 5G location network architecture, the UE can quickly redirect to an LMF entity after moving so as to meet high-precision and low-latency location requirements of the 5G location network architecture.

In a second aspect, the present application provides a method for selecting an LMF. The method is applied to a source node in a process that a terminal moves across nodes, and includes: executing a process of selecting an L-LMF of a target node as a new LMF entity when it is determined that the terminal moves across the nodes; and executing a process of redirecting to the new LMF entity.

In a third aspect, the present application provides a method for selecting an LMF. The method is applied to a node where a new LMF entity is located in a process that a terminal moves across nodes, and includes: receiving a message requesting to use an L-LMF as the new LMF entity; and determining the L-LMF as the new LMF entity, and sending a response message carrying an undergoing related location service flow.

In a fourth aspect, the present application provides a device for selecting an LMF. The device is a device where an AMF entity/MME corresponding to a terminal in a process of moving across nodes is located. The device includes: a processor and a memory. The memory stores a program code. When the program code is executed by the processor, the processor is configured to: determine to trigger updating of an LMF entity, and execute a process of selecting a new LMF entity; and execute a process of redirecting to the new LMF entity.

In a fifth aspect, the present application provides another device for selecting an LMF. The device is a device where a source node is located in a process that a terminal moves across nodes. The device includes: a processor and a memory. The memory stores a program code, and when the program code is executed by the processor, the processor is configured to: execute a process of selecting an L-LMF of a target node as a new LMF entity when it is determined that the terminal moves across the nodes; and execute a process of redirecting to the new LMF entity.

In a sixth aspect, the present application provides a final device for selecting an LMF. The device is a device where a node, where a new LMF entity is located, is located in a process that a terminal moves across nodes. The device includes: a processor and a memory. The memory stores a program code, and when the program code is executed by the processor, the processor is configured to execute: receiving a message requesting to use an L-LMF as the new LMF entity; and determining the L-LMF as the new LMF entity, and sending a response message carrying an undergoing related location service flow.

In a seventh aspect, the present application provides a first device for selecting an LMF. The first device is a device where an AMF entity/MME corresponding to a terminal in a process of moving across nodes is located. The first device includes: an updating selecting module, and a redirection executing module. The updating selecting module is configured to determine to trigger updating of an LMF entity, and execute a process of selecting a new LMF entity; and the redirection executing module is configured to execute a process of redirecting to the new LMF entity.

In an eighth aspect, the present application provides a second device for selecting an LMF. The second device is a device where a source node is located in a process that a terminal moves across nodes. The second device includes: a selecting module and a redirection module. The selecting module is configured to execute a process of selecting an L-LMF of a target node as a new LMF entity when it is determined that the terminal moves across the nodes; and the redirection module is configured to execute a process of redirecting to the new LMF entity.

In a ninth aspect, the present application provides a third device for selecting an LMF. The third device is a device where a node, where a new LMF entity is located, is located in a process that a terminal moves across nodes. The third device includes: a request receiving module and a response sending module. The request receiving module is configured to receive a message requesting to use an L-LMF as the new LMF entity; and the response sending module is configured to determine the L-LMF as the new LMF entity, and send a response message carrying an undergoing related location service flow.

In a tenth aspect, the present application provides a computer storage medium, storing a computer program; and when executed by a processing unit, the program implements the steps of the method of the first aspect.

In an eleventh aspect, the present application provides a computer storage medium, storing a computer program; and when executed by a processing unit, the program implements the steps of the method of the second aspect.

In a twelfth aspect, the present application provides a computer storage medium, storing a computer program; and when executed by a processing unit, the program implements the steps of the method of the third aspect.

In addition, the technical effects achieved by any implementation in the second aspect to the tenth aspect may refer to the technical effects achieved by different implementations in the first aspect, which are omitted here.

### Brief Description of the Drawings

In order to illustrate the technical solutions in the embodiments of the present application clearer, the drawings needing to be used in description of the embodiments will be briefly introduced below. Obviously, the drawings described below are only some embodiments of the present application, and other drawings can further be obtained according to these drawings for those of ordinary skill in the art without inventive efforts.
Fig. 1 is a schematic diagram of a 5G mobile communication system provided by an embodiment of the present application.
Fig. 2A is a schematic diagram of a 5G radio protocol architecture provided by an embodiment of the present application.
Fig. 2B is a schematic diagram of a 5G radio protocol architecture provided by an embodiment of the present application.
Fig. 3 is a diagram of a 5G location network architecture provided by an embodiment of the present application.
Fig. 4 is a flowchart of a first system for selecting an LMF provided by an embodiment of the present application.
Fig. 5 is a flowchart of a second system for selecting an LMF provided by an embodiment of the present application.
Fig. 6 is a flowchart of a third system for selecting an LMF provided by an embodiment of the present application.
Fig. 7 is a flowchart of a fourth system for selecting an LMF provided by an embodiment of the present application.
Fig. 8 is a flowchart of a fifth system for selecting an LMF provided by an embodiment of the present application.
Fig. 9 is a flowchart of a sixth system for selecting an LMF provided by an embodiment of the present application.
Fig. 10 is a flowchart of a seventh system for selecting an LMF provided by an embodiment of the present application.
Fig. 11 is a flowchart of a first device for selecting an LMF provided by an embodiment of the present application.
Fig. 12 is a flowchart of a second device for selecting an LMF provided by an embodiment of the present application.
Fig. 13 is a flowchart of a third device for selecting an LMF provided by an embodiment of the present application.
Fig. 14 is a flowchart of a first method for selecting an LMF provided by an embodiment of the present application.
Fig. 15 is a flowchart of a second method for selecting an LMF provided by an embodiment of the present application.
Fig. 16 is a flowchart of a third method for selecting an LMF provided by an embodiment of the present application.

### Detailed Description of the Embodiments

In order to make the objective, technical solutions and advantages of the present application clearer, the present application will be further described in detail with reference to the drawings. Obviously, the described embodiments are only part of the embodiments of the present application, but not all the embodiments. On the basis of the embodiments in the present application, all other embodiments obtained by those of ordinary skill in the art without inventive efforts fall within the protection scope of the present application.

An application scene described by the embodiments of the present application is intended to illustrate the technical solutions of the embodiments of the present application more clearly, and does not form limitation to the technical solutions provided by the embodiments of the present application. Those of ordinary skill in the art can know that the technical solutions provided by the embodiments of the present application are also applicable to similar technical problems along appearing of a new application scene.

A 5G mobile communication system is introduced as follows.

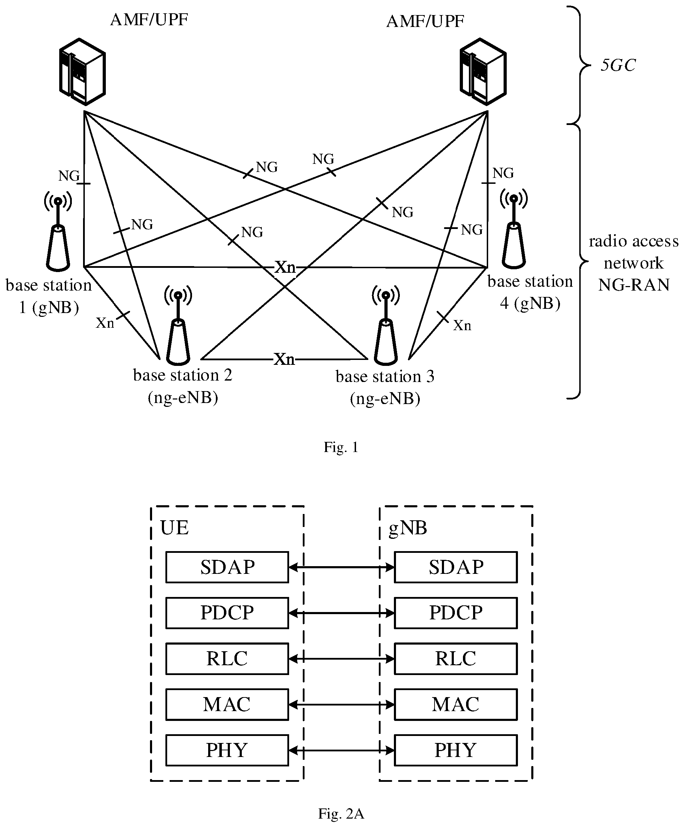

Referring to Fig. 1, in a 5G system, nodes on a network side are mostly in wired connection, that is to say, next generation radio access network (NG-RAN) nodes are connected through a wired link. As shown in Fig. 1, base stations are connected through a wired link, an interface for transmitting data is an Xn interface, and the NG-RAN nodes and core network 5GC nodes are also connected through a wired link. For example, an AMF or a user plane function (UPF) entity is connected with the base stations through a wired link, where the base stations include a 5G base station (gNB) and a 4G base station with an ng interface (ng evolved NodeB, ng-eNB).

A 5G radio protocol architecture is introduced as follows.

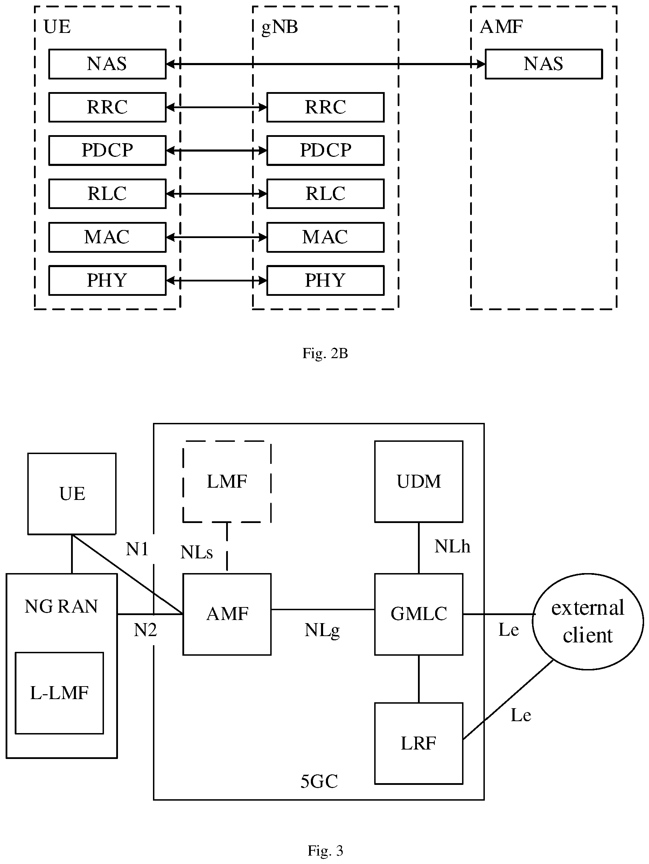

A 5G basic user plane protocol layer includes: a service data adaptation protocol (SDAP), a packet data convergence protocol (PDCP), a radio link control (RLC) and media access control (MAC) address, and a port physical layer (PHY). A control plane protocol layer includes: a non-access stratum (NAS), radio resource control (RRC), PDCP, RLC, MAC and PHY. Protocol stack architectures of a user plane and a control plane are as shown in Fig. 2A and Fig. 2B respectively.

A 5G location network architecture is introduced as follows.

As shown in Fig. 3 which shows a 5G location service network architecture based on services, and a location management function (LMF) entity is located at a NG-RAN node or located inside a core network 5GC. The LMF entity includes an L-LMF entity and a CN-LMF entity, and has the following functions: supporting location computing, obtaining a downlink location measuring result or location estimation from the UE, obtaining an uplink location measuring result from an RAN side, obtaining auxiliary data from the RAN side, and so on.

The LMF entity is located in a CN, when the connected-state UE moves across RAN nodes under the same AMF, the LMF serving the UE does not change. Therefore, in the embodiments provided by the present application, based on introduction of the Local LMF entity in an RAN and utilizing the CN-LMF entity in the 5G location network architecture and the L-LMF located in the RAN, an appropriate LMF entity can be selected for the UE according to a certain principle (e.g., according to a location quality of service (QoS) requirement, a location of the UE, the capability of the Local LMF/CN LMF, a location type (such as a real-time or latency requirement) and the like) when the core network has a location requirement and in the process that the connected-state UE moves across the RAN nodes. Either the CN-LMF entity or the L-LMF entity of a service node may be selected so as to meet service requirements of obtaining low-latency location services and distinguishing service types under the 5G location network architecture.

An embodiment of the present application provides a system for selecting an LMF. The system includes: a corresponding AMF entity/MME in the process of moving across nodes of a terminal, a source node in the process of moving across nodes of the terminal, and a node where a new LMF entity is located in the process of moving across nodes of the terminal. Selection of the new LMF entity in the process of moving across nodes of the connected UE is implemented by using the system.

As an optional implementation, the new LMF entity is selected by the AMF entity/MME based on an Xn interface or an NG interface. The AMF entity/MME is configured to determine to trigger updating of an LMF entity, and execute a process of selecting the new LMF entity; and execute a process of redirecting to the new LMF entity.

As an optional implementation, the new LMF entity is selected by the source node based on the Xn interface or the NG interface. The source node is configured to execute a process of selecting an L-LMF entity of a target node as the new LMF entity when it is determined that the terminal moves across nodes; and execute a process of redirecting to the new LMF entity.

As an optional implementation, when the L-LMF entity of the target node is selected as the new LMF entity based on the Xn interface or the NG interface. The target node is configured to receive a message requesting to use the L-LMF entity as the new LMF entity), determine the L-LMF entity as the new LMF entity, and send a response message carrying an undergoing related location service flow.

During specific implementation, the following several cases are included.
Case 1: under the NG interface, the AMF entity/MME selects the L-LMF of the target node as the new LMF entity, and an original LMF entity of the UE as the L-LMF entity of the source node.
Case 2: under the NG interface, the AMF entity/MME selects the CN-LMF as the new LMF, and the original LMF entity of the UE as the L-LMF entity of the source node.
Case 3: under the NG interface, the AMF entity/MME selects the L-LMF of the target node as the new LMF entity, and the original LMF entity of the UE as the CN-LMF entity.
Case 4: under the Xn interface, the AMF entity/MME selects the CN-LMF entity as the new LMF entity, and the original LMF entity of the UE as the L-LMF entity of the source node.
Case 5: under the Xn interface, the AMF entity/MME selects the L-LMF entity of the target node as the new LMF, and the original LMF entity of the UE as the L-LMF entity of the source node.
Case 6: under the Xn interface, the source node selects the CN-LMF entity as the new LMF entity, and the original LMF entity of the UE as the L-LMF entity of the source node.
Case 7: under the Xn interface, the source node selects the L-LMF entity of the target node as the new LMF entity, and the original LMF entity of the UE as the CN-LMF.

Detailed descriptions of the above seven different cases are specifically illustrated below.

Case 1: under the NG interface, the AMF entity/MME selects the L-LMF of the target node as the new LMF entity, and the original LMF entity of the UE as the L-LMF entity of the source node; and a specific implementation flow is as follows.
1) When the AMF entity/MME receives a handover request message carrying information of an undergoing related location service flow and sent by the source node, it determines to trigger updating of the LMF entity.
   The above handover request message carries the information of the undergoing related location service flow, so as to notify the AMF entity/MME of initiating handover between nodes to the target node, and notify the AMF entity/MME of reselecting the new LMF entity for the terminal.
2) The AMF entity/MME selects the L-LMF entity of the target node as the new LMF entity.
3) The AMF entity/MME sends the handover request message or an LMF redirection notification message carrying the information of the undergoing related location service flow to the L-LMF entity of the target node.
   When the target node receives the handover request message or the LMF redirection notification message carrying the information of the undergoing related location service flow, whether the L-LMF of the target node is selected as the new LMF entity may be determined, and the result is returned to the AMF entity/MME as a handover request confirming message.
4) When the AMF entity/MME receives the handover request confirming message returned by the L-LMF of the target node, it is determined that the process of reselecting the LMF is completed.
5) The AMF entity/MME sends a handover command message to the source node and notifies the source node of the result of the selected new LMF entity.

Optionally, when it is determined that the terminal has not terminated the location service flow with the original LMF entity, the AMF entity/MME notifies the source node of the result of the selected new LMF entity.

Optionally, when it is determined that the terminal has terminated the location service flow with the original LMF entity, the AMF entity/MME sends a response message of terminating the location service to a gateway mobile location center (GMLC).

Optionally, when a location response message returned by the new L-LMF entity is received, the AMF entity/MME determines to complete redirection and notifies the GMLC.

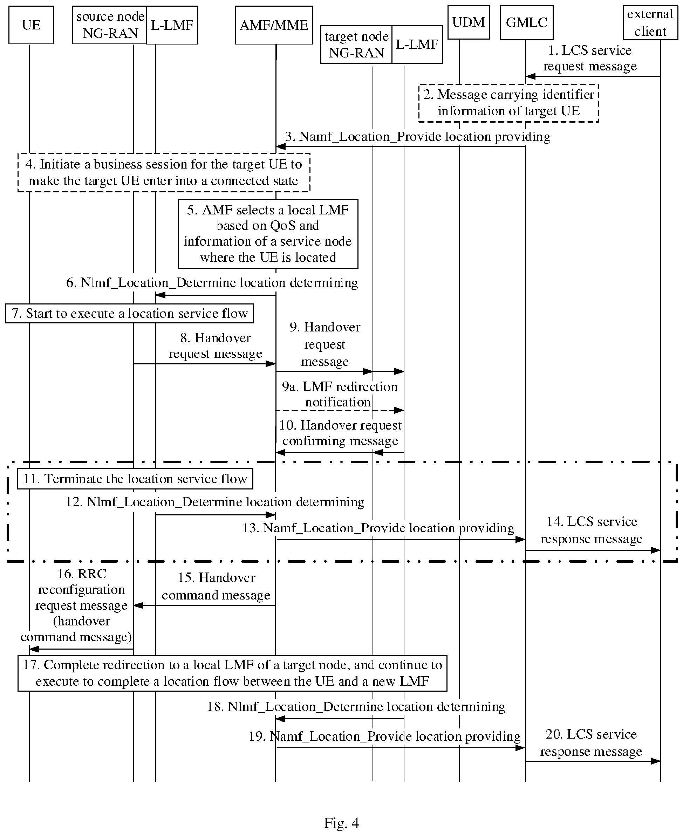

As shown in Fig. 4, the above system further includes: an external client, the GMLC, unified data management (UDM) and the terminal (UE); and a specific implementation flow is as follows.
Step 1: the external client locates a client to initiate a position request, where the request message includes an identifier of the UE having a location requirement, a location QoS requirement and the like.
Step 2: optionally, the GMLC sends a message to the UDM, where the message carries identifier information of the UE having the location requirement; and the GMLC receives a message of the UDM, where the message includes address information of the AMF entity/MME.
Step 3: the GMLC sends a location request message to the AMF entity/MME, where the request message contains an identifier of target UE, a location QoS requirement and the like.
Step 4: optionally, the AMF entity/MME initiates a business session process for the UE having the location requirement to enable the UE to enter into a connected state.
Step 5: the AMF entity/MME selects the L-LMF entity of the target node for the UE according to information of the source node NG-RAN where the UE is located, the location QoS requirement, and pre-stored relevant information of the L-LMF or relevant location information (e.g., location ability information) obtained by inquiring a network repository function (NRF).
Step 6: the AMF entity/MME sends a location request message (Nlmf_Location_Determine) to the L-LMF through an NLs/SLs interface, where the location request message contains a location session identifier, an identifier of the target UE, the location QoS requirement and other information.
Step 7: the L-LMF of the source node starts to execute the location service flow.
Step 8: the source node sends the handover request message to the AMF entity/MME through the NG interface according to a UE state so as to initiate handover to the target node, where the handover request message carries the information of the undergoing related location service flow.
Step 9: the AMF entity/MME sends the handover request message to the target node, and the AMF entity/MME selects to use an L-LMF entity of a target service node of the UE according to information of the target node which is switched to by the UE, the location QoS requirement and pre-stored relevant information of the L-LMF entity or relevant information obtained by inquiring the NRF; where the handover request message may carry the information of the undergoing related location service flow.
Step 9a: optionally, if the handover request message in step 9 does not carry the information of the undergoing related location service flow, an LMF redirection notification message may be used to select to use the L-LMF entity of the target service node of the UE; where the LMF redirection notification message carries the information of the undergoing related location service flow.
Step 10: the target node returns a handover request confirming message which may carry the information of the related location service flow.
Step 11: the location service flow is terminated.
Step 12: the L-LMF entity of the source node sends a location terminating response message (Nlmf_Location_Determine) to the AMF entity/MME.
Step 13: the AMF entity/MME sends a location terminating response message (Nlmf_Location_Provide) to the GMLC.
Step 14: the GMLC sends an LCS service response message to the external client to notify the external client of terminating the location service flow.
Step 11 to step 14: if the location service flow is terminated before step 15, a normal location service flow is executed from step 12 to step 14, step 17 to step 20 will not happen, and the LMF redirection process is terminated.
Step 15: the AMF entity/MME initiates the handover command message to the source node, where the handover command message carries the information of the undergoing related location service flow.
Step 16: the source node initiates the handover command message to the UE, where the handover command message carries the information of the undergoing related location service flow.
Step 17: L-LMF redirection to the target node is completed, and a location flow between the UE and the new LMF continues to be executed and completed.
Step 18: the L-LMF of the target node sends a location service terminating response message (Nlmf_Location_Determine) to the AMF entity/MME.
Step 19: the AMF entity/MME sends a location service terminating response message (Nlmf_Location_Provide) to the GMLC.
Step 20: the GMLC sends an LCS service response message to the external client to notify the external client of terminating the location service flow.

Case 2: under the NG interface, the AMF entity/MME selects the CN-LMF as the new LMF, and the original LMF entity of the UE as the L-LMF entity of the source node; and specific implementation steps are as follows.
1) When the AMF entity/MME receives a handover request message carrying information of an undergoing related location service flow and sent by the source node, it determines to trigger updating of the LMF entity.
2) The AMF entity/MME selects the CN-LMF entity as the new LMF entity.
3) The AMF entity/MME sends an LMF redirection request message carrying the information of the undergoing related location service flow to the CN-LMF entity.
4) When the AMF entity/MME receives an LMF redirection response message carrying the information of the undergoing related location service flow and returned by the CN-LMF entity, it is determined that the process of selecting the new LMF entity is completed.
5) The AMF entity/MME sends a handover command message to the source node and notifies the source node of the result of the selected new LMF entity.

Optionally, when it is determined that the terminal has not terminated the location service flow with the original LMF entity, the AMF entity/MME notifies the source node of the result of the selected new LMF entity.

Optionally, when it is determined that the terminal has terminated the location service flow with the original LMF entity, the AMF entity/MME sends a response message of terminating the location service to the GMLC.

Optionally, when a location response message returned by the new L-LMF entity is received, the AMF entity/MME determines to complete redirection and notifies the GMLC.

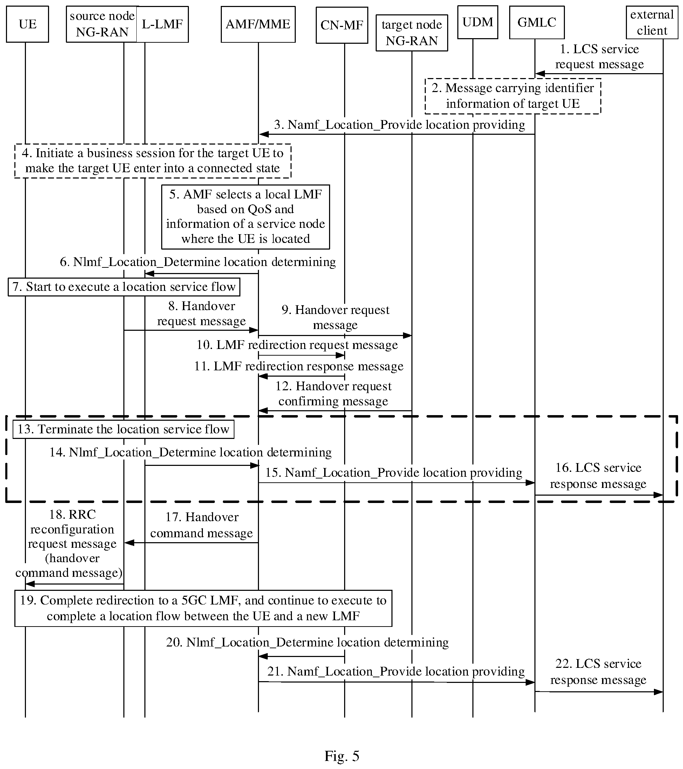

As shown in Fig. 5, the above system further includes: the external client, the GMLC, the UDM and the UE; and a specific implementation flow is as follows.
Step 1: the external client locates a client to initiate a position request, where the request message contains an identifier of the UE having a location requirement, a location QoS requirement and the like.
Step 2: optionally, the GMLC sends a message to the UDM, where the message carries identifier information of the UE having the location requirement; and the GMLC receives a message of the UDM, where the message includes address information of the AMF entity/MME.
Step 3: the GMLC sends a location request message to the AMF entity/MME, where the request message contains an identifier of the target UE, the location QoS requirement and the like.
Step 4: optionally, the AMF entity/MME initiates a business session process for the UE having the location requirement to enable the UE to enter into a connected state.
Step 5: the AMF entity/MME sends the handover request message to the target node and selects the L-LMF entity of the service node for the UE according to information of the target node which is switched to by the UE, the location QoS requirement, and pre-stored relevant information of the L-LMF entity or relevant information obtained by inquiring the NRF.
Step 6: the AMF entity/MME sends a location request message to the L-LMF through the NLs/SLs interface; where the location request message contains a location session identifier, the identifier of the target UE, the location QoS requirement and other information.
Step 7: the L-LMF of the source node starts to execute the location service flow.
Step 8: the source node sends the handover request message to the AMF entity/MME through the NG interface according to a UE state so as to initiate a handover request to the target node, where the handover request message carries the information of the undergoing related location service flow.
Step 9: the AMF entity/MME sends the handover request message to the target node.
Step 10: the AMF entity/MME sends the handover request message to the target node, and reselects the CN-LMF entity according to the information of the target node which is switched to by the UE, the location QoS requirement and pre-stored relevant information of the L-LMF entity or relevant information obtained by inquiring the NRF; and the AMF entity/MME initiates an LMF redirection request to the CN-LMF entity; where the LMF redirection request carries the information of the undergoing related location service flow.
Step 11: the CN-LMF entity returns an LMF redirection response message to the AMF entity/MME, where the LMF redirection response message carries the information of the undergoing related location service flow.
Step 12: the target node returns a handover request conforming message.
Step 13: the location service flow is terminated.
Step 14: the L-LMF entity of the source node sends a location terminating response message (Nlmf_Location_Determine) to the AMF entity/MME.
Step 15: the AMF entity/MME sends a location terminating response message (Nlmf_Location_Provide) to the GMLC.
Step 16: the GMLC sends an LCS service response message to the external client to notify the external client of terminating the location service flow.
Step 13 to step 16: if the location service flow is terminated before step 17, a normal location service flow is executed from step 14 to step 16, step 19 to step 22 will not happen, and the LMF redirection process is terminated.
Step 17: the AMF entity/MME initiates a handover command message to the source node, where the handover command message carries the information of the undergoing related location service flow.
Step 18: the source node initiates the handover command message to the UE, which may be an RRC reconfiguration request message, carrying the information of the undergoing related location service flow.
Step 19: redirection to the CN-LMF entity is completed, and a location flow between the UE and the new LMF continues to be executed and completed.
Step 20: the L-LMF of the target node sends a location service terminating response message (Nlmf_Location_Determine) to the AMF entity/MME.
Step 21: the AMF entity/MME sends a location service terminating response message (Nlmf_Location_Provide) to the GMLC.
Step 22: the GMLC sends an LCS service response message to the external client to notify the external client of terminating the location service flow.

Case 3: under the NG interface, the AMF entity/MME selects the L-LMF of the target node as the new LMF entity, and the original LMF entity of the UE as the CN-LMF entity; and specific implementation steps are as follows.
1) When the AMF entity/MME receives a handover request confirming message sent by the target node, it determines to trigger updating of the LMF entity.
2) The AMF entity/MME selects the L-LMF entity of the target node as the new LMF entity.
3) The AMF entity/MME sends an LMF redirection request message carrying the information of the undergoing related location service flow to the original LMF entity.
4) After an LMF redirection response message returned by the original LMF entity is received, an LMF redirection notification message carrying the information of the undergoing related location service flow is sent to the L-LMF entity of the target node.

Optionally, when it is determined that the terminal has not terminated the location service flow with the original LMF entity, the AMF entity/MME executes the process of selecting the new LMF entity.

Optionally, when it is determined that the terminal has terminated the location service flow with the original LMF entity, the AMF entity/MME sends a response message of terminating the location service to the GMLC.

Optionally, when a location response message returned by the new L-LMF entity is received, the AMF entity/MME determines to complete redirection and notifies the GMLC.

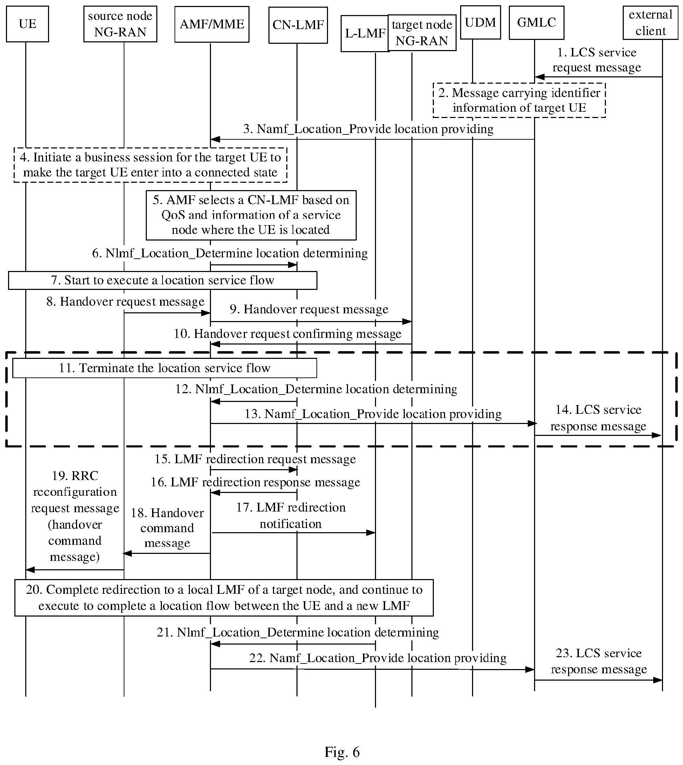

As shown in Fig. 6, the above system further includes: the external client, the GMLC, the UDM and the UE; and a specific implementation flow is as follows.
Step 1: the external client locates a client to initiate a position request; where the request message contains an identifier of the UE having a location requirement, a location QoS requirement and the like.
Step 2: optionally, the GMLC sends a message to the UDM, where the message carries identifier information of the UE having the location requirement; and the GMLC receives a message of the UDM, where the message includes address information of the AMF entity/MME.
Step 3: the GMLC sends a location request message to the AMF entity/MME, where the request message contains an identifier of the target UE, the location QoS requirement and the like.
Step 4: optionally, the AMF entity/MME initiates a business session process for the UE having the location requirement to enable the UE to enter into a connected state.
Step 5: the AMF entity/MME sends the handover request message to the target node and selects the CN-LMF entity for the UE according to information of the target node which is switched to by the UE, the location QoS requirement, and pre-stored relevant information of the L-LMF entity or relevant information obtained by inquiring the NRF.
Step 6: the AMF entity/MME sends a location request message to the L-LMF through the NLs/SLs interface; where the location request message contains a location session identifier, the identifier of the target UE, the location QoS requirement and other information.
Step 7: the L-LMF of the source node starts to execute the location service flow.
Step 8: the source node sends the handover request message to the AMF entity/MME through the NG interface according to a UE state so as to initiate a handover request to the target node; where the handover request message carries the information of the undergoing related location service flow.
Step 9: the AMF entity/MME initiates the handover request to the target node.
Step 10: the target node returns a handover request confirming message.
Step 11: the location service flow is terminated.
Step 12: the L-LMF entity of the source node sends a location terminating response message (Nlmf_Location_Determine) to the AMF entity/MME.
Step 13: the AMF entity/MME sends a location terminating response message (Nlmf_Location_Provide) to the GMLC.
Step 14: the GMLC sends an LCS service response message to the external client to notify the external client of terminating the location service flow.
Step 11 to step 14: if the location service flow is terminated before step 15, a normal location service flow is executed from step 11 to step 14, step 15 to step 16 and step 19 to step 22 will not happen, and the LMF redirection process is terminated.
Step 15: the AMF entity/MME relocates and selects to use the L-LMF entity of the target node according to the information of the target node of the UE, the location QoS requirement and pre-stored relevant information of the L-LMF or relevant information obtained by inquiring the NRF; and the AMF entity/MME initiates an LMF redirection request to the L-LMF entity.
Step 16: the L-LMF entity returns an LMF redirection response message, where the LMF redirection response message carries the information of the undergoing related location service flow.
Step 17: the AMF entity/MME initiates an LMF redirection notification message to the target node, where the LMF redirection notification message carries the information of the undergoing related location service flow.
Step 18: the AMF entity/MME initiates a handover command message to the source node, where the handover command message carries the information of the undergoing related location service flow.
Step 19: the source node initiates the handover command message to the UE, where the handover command message carres the information of the undergoing related location service flow.
Step 20: redirection to the L-LMF of the target node is completed, and a location flow between the UE and the new LMF continues to be executed and completed.
Step 21: the L-LMF of the target node sends a location service terminating response message (Nlmf_Location_Determine) to the AMF entity/MME.
Step 22: the AMF entity/MME sends a location service terminating response message (Nlmf_Location_Provide) to the GMLC.
Step 23: the GMLC sends an LCS service response message to the external client to notify the external client of terminating the location service flow.

Case 4: under the Xn interface, the AMF entity/MME selects the CN-LMF entity as the new LMF entity, and the original LMF entity of the UE as the L-LMF entity of the source node, and specific implementation steps are as follows.
1) When the source node determines that the terminal moves across nodes, the process of selecting the L-LMF of the target node as the new LMF entity is executed.
2) The source node sends a handover request message or an LMF redirection notification message carrying the information of the undergoing related location service flow to the L-LMF of the target node.
3) A handover request confirming message returned by the L-LMF of the target node is received.
4) When the AMF entity/MME receives an LMF redirection request message sent after the target node sends the handover request conforming message to the source node, it determines to trigger updating of the LMF entity.
5) The AMF entity/MME selects the L-LMF entity of the target node as the new LMF entity.
6) The AMF entity/MME sends an LMF redirection command message carrying the information of the undergoing related location service flow to the L-LMF entity of the target node, and sends the LMF redirection notification message carrying the information of the undergoing related location service flow to the source node.
7) When the AMF entity/MME receives the LMF redirection request message sent by the target node and determines that the terminal has not terminated the location service flow with the original LMF entity, it determines to trigger updating of the LMF entity.

Optionally, when it is determined that the terminal has not terminated the location service flow with the original LMF entity, the AMF entity/MME sends the LMF redirection command message to the L-LMF entity of the target node and sends the LMF redirection notification message to the source node.

Optionally, when it is determined that the terminal has terminated the location service flow with the original LMF entity, the AMF entity/MME sends a response message of terminating the location service to the GMLC.

Optionally, when a location response message returned by the new L-LMF entity is received, it is determined that redirection is completed; and then the GMLC is notified.

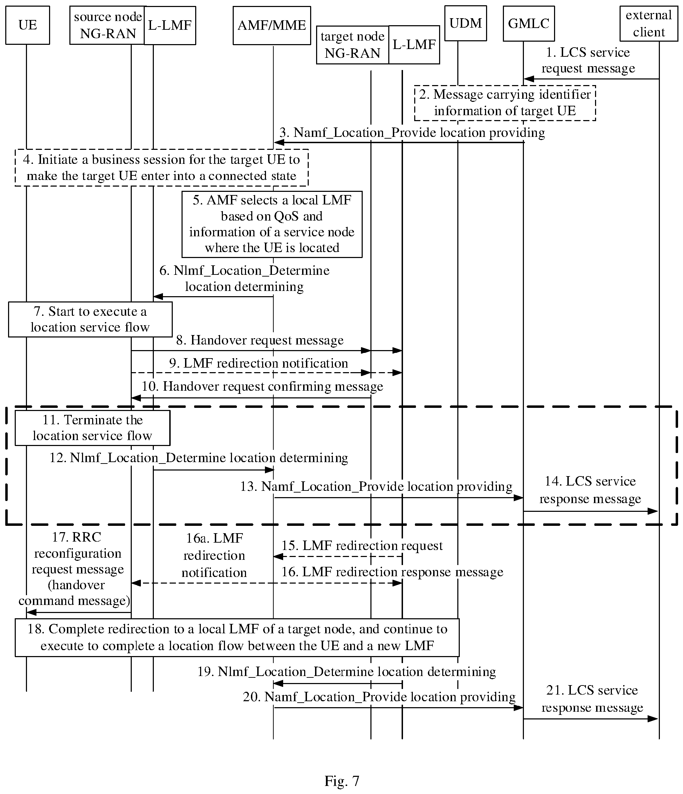

As shown in Fig. 7, the above system further includes: the external client, the GMLC, the UDM and the UE; and a specific implementation flow is as follows.
Step 1: the external client locates a client to initiate a position request, where the request message contains an identifier of the UE having a location requirement, a location QoS requirement and the like.
Step 2: optionally, the GMLC sends a message to the UDM, where the message carries identifier information of the UE having the location requirement; and the GMLC receives a message of the UDM, where the message includes address information of the AMF entity/MME.
Step 3: the GMLC sends a location request message to the AMF entity/MME, where the request message contains an identifier of the target UE, the location QoS requirement and the like.
Step 4: optionally, the AMF entity/MME initiates a business session process for the UE having the location requirement to enable the UE to enter into a connected state.
Step 5: the AMF entity/MME sends the handover request message to the target node and selects the L-LMF entity of the service node for the UE according to information of the target node which is switched to by the UE, the location QoS requirement, and pre-stored relevant information of the L-LMF entity or relevant information obtained by inquiring the NRF.
Step 6: the AMF entity/MME sends a location request message to the L-LMF through the NLs/SLs interface; where the location request message contains a location session identifier, the identifier of the target UE, the location QoS requirement and other information.
Step 7: the L-LMF of the source node starts to execute the location service flow.
Step 8: the service node sends the handover request message to the target node through the Xn interface according to a UE state, where the handover request message carries the information of the undergoing related location service flow.
   A precondition is that supporting information about the L-LMF entity interacts between NG-RANs, and if the target node does not support the L-LMF, the source node may redirect to the CN-LMF.
Step 9: optionally, if the handover request message in step 8 does not carry the information of the undergoing related location service flow, the LMF redirection notification message is used to notify to use the L-LMF entity of the UE target node; where the LMF redirection notification message carries the information of the undergoing related location service flow.
Step 10: the target node returns a handover request confirming message, where the handover request confirming message carries information of a related location service.
Step 11: the location service flow is terminated.
Step 12: the L-LMF entity of the source node sends a location terminating response message (Nlmf_Location_Determine) to the AMF entity/MME.
Step 13: the AMF entity/MME sends a location terminating response message (Nlmf_Location_Provide) to the GMLC.
Step 14: the GMLC sends an LCS service response message to the external client to notify the external client of terminating the location service flow.
Step 11 to step 14: if the location service flow is terminated before step 16a/step 17, a normal location service flow is executed from step 12 to step 14, the source node ignores step 16a, step 18 to step 21 will not happen, and the LMF redirection process is terminated.
Step 15: the L-LMF of the target node initiates a redirection request message to the AMF entity/MME, where the redirection request message carries the information of the undergoing related location service flow.
Step 16: the AMF entity/MME returns a redirection response message to the target node so as to determine whether the L-LMF of the target node is the L-LMF selected after LMF redirection of the terminal.
Step 16a: meanwhile, the AMF entity/MME sends a redirection notification message to the source node, where the redirection notification message carries the information of the undergoing related location service flow.
Step 17: the source node initiates a handover command message to the UE, where the handover command message carries the information of the undergoing related location service flow.
Step 18: redirection to the L-LMF of the target node is completed, and a location flow between the UE and the new LMF continues to be executed and completed.
Step 19: the L-LMF of the target node sends a location service terminating response message (Nlmf_Location_Determine) to the AMF entity/MME.
Step 20: the AMF entity/MME sends a location service terminating response message (Nlmf_Location_Provide) to the GMLC.
Step 21: the GMLC sends an LCS service response message to the external client to notify the external client of terminating the location service flow.

If information about redirection to the L-LMF is carried in step 19, and the AMF is used to recognize whether the information is an LMF redirection message, then step 15 to step 16a may be optional implementation steps.

Case 5: under the Xn interface, the AMF entity/MME selects the L-LMF entity of the target node as the new LMF, and the original LMF entity of the UE as the L-LMF entity of the source node; and specific implementation steps are as follows.
1) When the source node determines that the terminal moves across nodes, the process of selecting the L-LMF of the target node as the new LMF entity is executed.
2) The source node sends a handover request message or an LMF redirection notification message carrying the information of the undergoing related location service flow to the L-LMF of the target node.
3) When the AMF entity/MME receives the LMF redirection notification message which is sent after the source node receives a handover request confirming message from the target node, it determines to trigger updating of the LMF entity; or, when the AMF entity/MME receives an LMF redirection request message which is sent after the target node sends the handover request confirming message to the source node, it determines to trigger updating of the LMF entity.
4) The L-LMF entity of the target node is selected as the new LMF entity.
5) An LMF redirection command message carrying the information of the undergoing related location service flow is sent to the L-LMF entity of the target node, and the LMF redirection notification message carrying the information of the undergoing related location service flow is sent to the source node.

Optionally, when the LMF redirection request message sent by the target node is received and it is determined that the terminal has not terminated the location service flow with the original LMF entity, it is determined to trigger updating of the LMF entity.

Optionally, when it is determined that the terminal has not terminated the location service flow with the original LMF entity, the LMF redirection command message is sent to the L-LMF entity of the target node and the LMF redirection notification message is sent to the source node.

Optionally, when it is determined that the terminal has terminated the location service flow with the original LMF entity, a response message of terminating the location service is sent to the GMLC.

Optionally, when a location response message returned by the new L-LMF entity is received, it is determined that redirection is completed; and then the GMLC is notified.

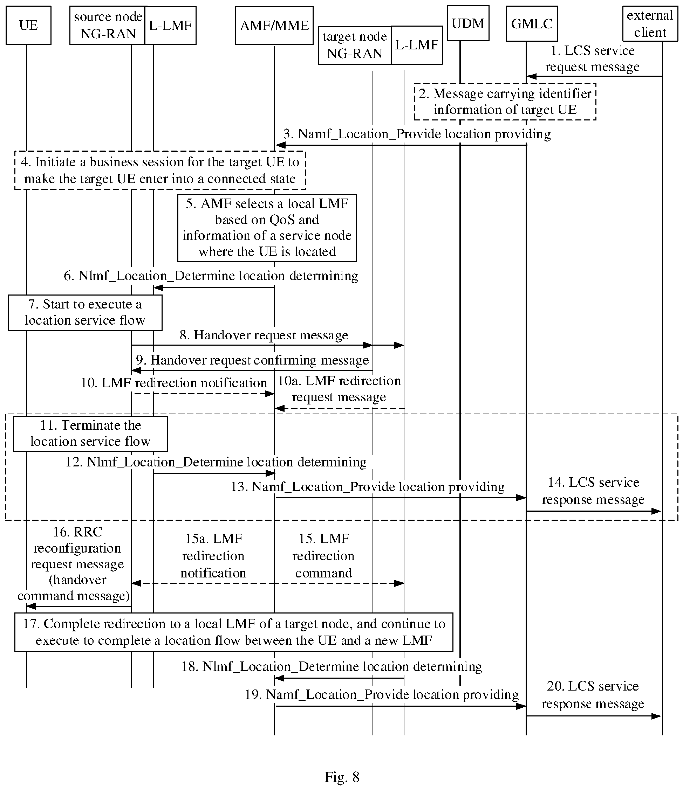

As shown in Fig. 8, the above system further includes: the external client, the GMLC, the UDM and the UE; and a specific implementation flow is as follows.
Step 1: the external client locates a client to initiate a position request; where the request message contains an identifier of the UE having a location requirement, a location QoS requirement and the like.
Step 2: optionally, the GMLC sends a message to the UDM, where the message carries identifier information of the UE having the location requirement; and the GMLC receives a message of the UDM, where the message includes address information of the AMF entity/MME.
Step 3: the GMLC sends a location request message to the AMF entity/MME; where the request message contains an identifier of the target UE, the location QoS requirement and the like.
Step 4: optionally, the AMF entity/MME initiates a business session process for the UE having the location requirement to enable the UE to enter into a connected state.
Step 5: the AMF entity/MME sends the handover request message to the target node and selects the L-LMF entity of the service node for the UE according to information of the target node which is switched to by the UE, the location QoS requirement, and pre-stored relevant information of the L-LMF entity or relevant information obtained by inquiring the NRF.
Step 6: the AMF entity/MME sends a location request message to the L-LMF through the NLs/SLs interface; where the location request message contains a location session identifier, the identifier of the target UE, the location QoS requirement and other information.
Step 7: the L-LMF of the source node starts to execute the location service flow.
Step 8: the service node sends the handover request message to the target node through the Xn interface according to a UE state, where the handover request message carries the information of the undergoing related location service flow.
A precondition is that supporting information about the L-LMF interacts between NG-RANs; and if the target node does not support the L-LMF, the source node may redirect to the CN-LMF.
Step 9: the target node returns a handover request confirming message, where the handover request confirming message carries information of a related location service.
Step 10: optionally, the source node uses the LMF redirection notification message to notify the L-LMF entity of the target node of the UE, where the LMF redirection notification message carries the information of the undergoing related location service flow.
Step 10a: optionally, the target node uses the LMF redirection request message to request the AMF entity/MME to redirect and select to use the L-LMF entity of the target service node of the UE.
Step 11: the location service flow is terminated.
Step 12: the L-LMF entity of the source node sends a location terminating response message (Nlmf_Location_Determine) to the AMF entity/MME.
Step 13: the AMF entity/MME sends a location terminating response message (Nlmf_Location_Provide) to the GMLC.
Step 14: the GMLC sends an LCS service response message to the external client to notify the external client of terminating the location service flow.
Step 11 to step 14: if the location service flow is terminated before step 15a/16, a normal location service flow is executed from step 12 to step 14, the source node does not execut step 15a, step 18 to step 21 will not happen, and the LMF redirection process is terminated.
Step 15: the AMF entity/MME initiates a redirection command message to the target node to select the LMF.
Step 15a: the AMF entity/MME sends the redirection notification message to the source node, where the redirection notification message carries the information of the undergoing related location service flow.
Step 16: the source node initiates a handover command message to the UE, where the handover command message carries the information of the undergoing related location service flow.
Step 17: redirection to the L-LMF of the target node is completed, and a location flow between the UE and the new LMF continues to be executed and completed.
Step 18: the L-LMF of the target node sends a location service terminating response message (Nlmf_Location_Determine) to the AMF entity/MME.
Step 19: the AMF entity/MME sends a location service terminating response message (Nlmf_Location_Provide) to the GMLC.
Step 20: the GMLC sends an LCS service response message to the external client to notify the external client of terminating the location service flow.

If related information of LMF redirection is carried in step 18, and the AMF is used to recognize that the information is an LMF redirection message, then step 15 to step 15a may be optional.

Case 6: under the Xn interface, the source node selects the CN-LMF entity as the new LMF entity, and the original LMF entity of the UE as the L-LMF entity of the source node; and specific implementation steps are as follows.
1) When the source node determines that the terminal moves across nodes, the process of selecting the L-LMF of the target node as the new LMF entity is executed.
2) The source node sends a handover request message carrying the information of the undergoing related location service flow to the L-LMF of the target node.
3) When the AMF entity/MME receives an LMF redirection notification message which is sent after the source node receives a handover request confirming message from the target node, it determines to trigger updating of the LMF entity
4) The AMF entity/MME selects the CN-LMF entity as the new LMF entity.
5) The AMF entity/MME sends an LMF redirection request message carrying the information of the undergoing related location service flow to the CN-LMF entity.
6) When the AMF entity/MME receives an LMF redirection response message carrying the information of the undergoing related location service flow and returned by the CN-LMF entity, it determines to complete the process of selecting the new LMF entity.
7) When the AMF entity/MME receives the LMF redirection notification message sent by the source node and determines that the terminal has not terminated the location service flow with the original LMF entity, it determines to trigger updating of the LMF entity.
8) The AMF entity/MME sends a handover command message to the source node, so as to notify the source node of the result of the selected new LMF entity.

Optionally, when it is determined that the terminal has terminated the location service flow with the original LMF entity, a response message of terminating the location service is sent to the GMLC.

Optionally, when a location response message returned by the new L-LMF entity is received, it is determined that redirection is completed; and then the GMLC is notified.

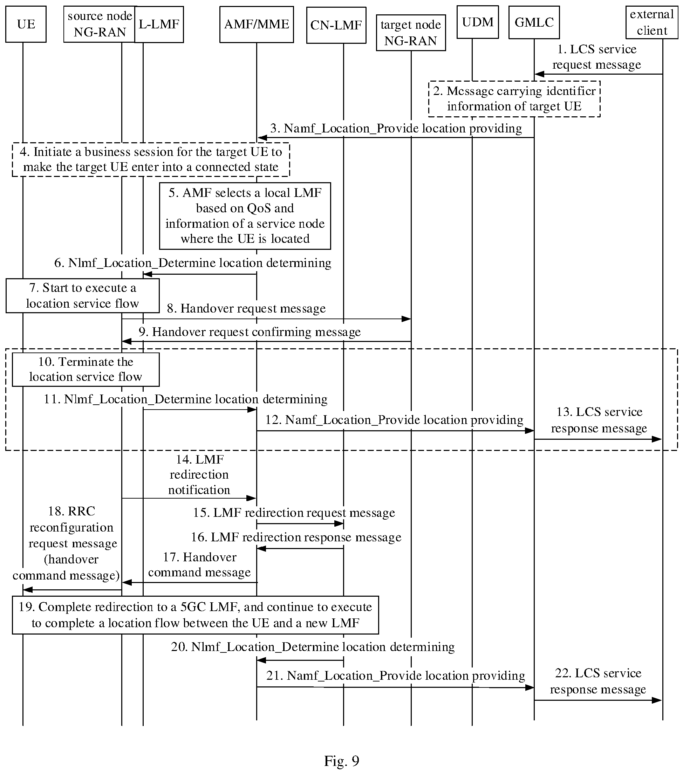

As shown in Fig. 9, the above system further includes: the external client, the GMLC, the UDM and the UE; and a specific implementation flow is as follows.
Step 1: the external client locates a client to initiate a position request; where the request message contains an identifier of the UE having a location requirement, a location QoS requirement and the like.
Step 2: optionally, the GMLC sends a message to the UDM, where the message carries identifier information of the UE having the location requirement; and the GMLC receives a message of the UDM, where the message includes address information of the AMF entity/MME.
Step 3: the GMLC sends a location request message to the AMF entity/MME; where the request message contains an identifier of the target UE, the location QoS requirement and the like.
Step 4: optionally, the AMF entity/MME initiates a business session process for the UE having the location requirement to enable the UE to enter into a connected state.
Step 5: the AMF entity/MME sends the handover request message to the target node and selects the L-LMF entity of the service node for the UE according to information of the target node which is switched to by the UE, the location QoS requirement, and pre-stored relevant information of the L-LMF entity or relevant information obtained by inquiring the NRF.
Step 6: the AMF entity/MME sends a location request message to the L-LMF through the NLs/SLs interface; where the location request message contains a location session identifier, the identifier of the target UE, the location QoS requirement and other information.
Step 7: the L-LMF of the source node starts to execute the location service flow.
Step 8: the source node sends the handover request message to the target node through the Xn interface according to a UE state.
Step 9: the target node returns a handover request confirming message.
Step 10: the location service flow is terminated.
Step 11: the L-LMF entity of the source node sends a location terminating response message (Nlmf_Location_Determine) to the AMF entity/MME.
Step 12: the AMF entity/MME sends a location terminating response message (Nlmf_Location_Provide) to the GMLC.
Step 13: the GMLC sends an LCS service response message to the external client to notify the external client of terminating the location service flow.
Step 10 to step 13: if the location service flow is terminated before step 14, a normal location service flow is executed from step 11 to step 13, step 14 to step 16 and step 18 to step 21 will not happen, and the LMF redirection process is terminated.
Step 14: the source node initiates an LMF redirection notification to the AMF entity/MME.
Step 15: the AMF entity/MME redirects to use the CN-LMF entity according to information of the target node of UE, the location QoS requirement and pre-stored relevant information of the LMF or relevant information obtained by inquiring the NRF; and the AMF entity/MME initiates an LMF redirection request to the CN-LMF entity, where the LMF redirection request carries the information of the undergoing related location service flow.
Step 16: the CN-LMF entity responds to the LMF redirection request and returns an LMF redirection response message, where the LMF redirection response message carries the information of the undergoing related location service flow.
Step 17: the AMF entity/MME initiates a handover command message to the source node, where the handover command message carries the information of the undergoing related location service flow.
Step 18: the source node initiates the handover command message to the UE, where the handover command message carries the information of the undergoing related location service flow.
tep 19: redirection to the CN-LMF is completed, and a location flow between the UE and the new LMF continues to be executed and completed.
Step 20: the L-LMF of the target node sends a location service terminating response message (Nlmf_Location_Determine) to the AMF entity/MME.
Step 21: the AMF entity/MME sends a location service terminating response message (Nlmf_Location_Provide) to the GMLC.
Step 22: the GMLC sends an LCS service response message to the external client to notify the external client of terminating the location service flow.

Case 7: under the Xn interface, the source node selects the L-LMF entity of the target node as the new LMF entity, and the original LMF entity of the UE as the CN-LMF; and a specific implementation flow is as follows.
1) When the source node determines that the terminal moves across nodes, the process of selecting the L-LMF of the target node as the new LMF entity is executed.
2) The source node sends a handover request message carrying the information of the undergoing related location service flow to the L-LMF of the target node.
3) When it is determined that the terminal accesses the target node or a path handover request message sent by the target node is received after the terminal accesses the target node, it is determined to trigger updating of the LMF entity.
4) The L-LMF entity of the target node is selected as the new LMF entity.
5) An LMF redirection notification message carrying the information of the undergoing related location service flow is sent to the L-LMF entity of the target node, or, an LMF redirection request message is sent to the original LMF entity; and after an LMF redirection response message returned by the original LMF entity is received, a path handover response message carrying the information of the undergoing related location service flow is sent to the L-LMF entity of the target node.
6) When it is determined that the terminal has terminated the location service flow with the original LMF entity, a handover command message is sent to the source node.

Optionally, when it is determined that the terminal has terminated the location service flow with the original LMF entity, a response message of terminating the location service is sent to the GMLC.

Optionally, when a location response message returned by the new L-LMF entity is received, it is determined that redirection is completed; and then the GMLC is notified.

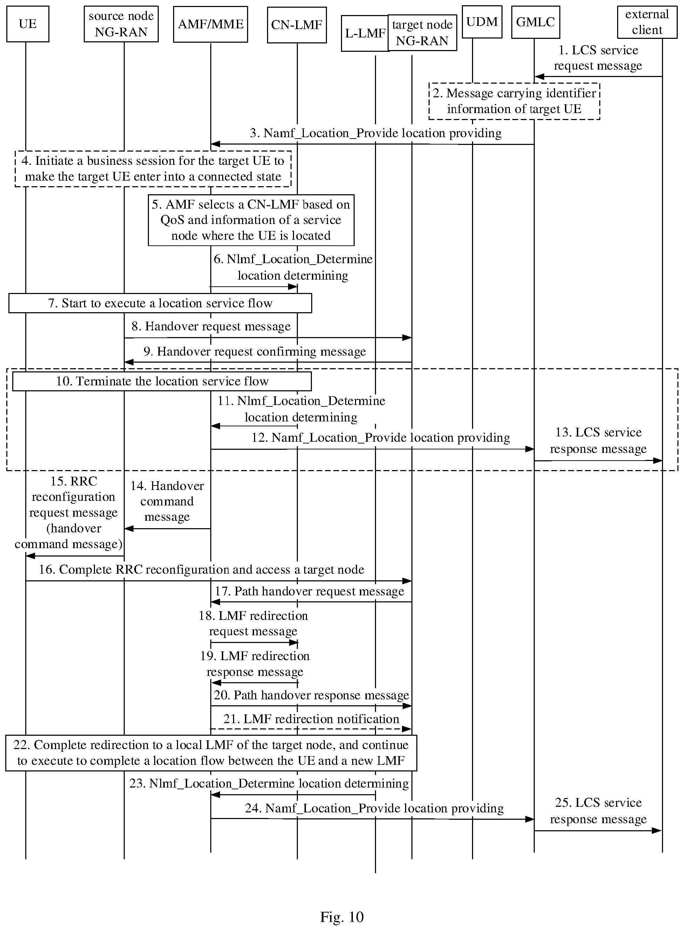

As shown in Fig. 10, the above system further includes: the external client, the GMLC, the UDM and the UE; and a specific implementation flow is as follows.
Step 1: the external client locates a client to initiate a position request; where the request message contains an identifier of the UE having a location requirement, a location QoS requirement and the like.
Step 2: optionally, the GMLC sends a message to the UDM, where the message carries identifier information of the UE having the location requirement; and the GMLC receives a message of the UDM, where the message includes address information of the AMF entity/MME.
Step 3: the GMLC sends a location request message to the AMF entity/MME; where the request message contains an identifier of the target UE, the location QoS requirement and the like.
Step 4: optionally, the AMF entity/MME initiates a business session process for the UE having the location requirement to enable the UE to enter into a connected state.
Step 5: the AMF entity/MME sends the handover request message to the target node and selects the CN-LMF entity at the core network side for the UE according to information of the target node which is switched to by the UE, the location QoS requirement, and pre-stored relevant information of the L-LMF entity or relevant information obtained by inquiring the NRF.
Step 6: the AMF entity/MME sends a location request message to the L-LMF through the NLs/SLs interface; where the location request message contains a location session identifier, the identifier of the target UE, the location QoS requirement and other information.
Step 7: the CN-LMF starts to execute the location service flow.
Step 8: the source node sends the handover request message to the target node through the Xn interface according to a UE state.
Step 9: the target node returns a handover request confirming message.
Step 10: the location service flow is terminated.
Step 11: the L-LMF entity of the source node sends a location terminating response message (Nlmf_Location_Determine) to the AMF entity/MME.
Step 12: the AMF entity/MME sends a location terminating response message (Nlmf_Location_Provide) to the GMLC.
Step 13: the GMLC sends an LCS service response message to the external client to notify the external client of terminating the location service flow.
Step 10 to step 13: if the location service flow is terminated before step 14, a normal location service flow is executed from step 10 to step 13, step 18 to step 19 and step 21 to step 25 will not happen, and the LMF redirection process is terminated.
Step 14: the AMF entity/MME initiates the handover command message to the source node.
Step 15: the source node initiates the handover command message to the UE.
Step 16: the UE accesses the target node.
Step 17: the target node initiates a path handover request.
Step 18: the AMF entity/MME redirects to select the CN-LMF entity according to information of the target node of the UE, the location QoS requirement and pre-stored relevant information of the L-LMF or relevant information obtained by inquiring the NRF; and the AMF entity/MME initiates an LMF redirection request to the CN-LMF entity.
Step 19: the CN-LMF entity responds to the LMF redirection request and returns an LMF redirection response message, where the LMF redirection response message carries the information of the undergoing related location service flow.
Step 20: the AMF entity/MME returns a path handover response which may carry the information of the undergoing related location service flow.
Step 21: optionally, the AMF entity/MME initiates an LMF redirection notification to the target node, where the LMF redirection notification carries the information of the undergoing related location service flow.
Step 22: redirection to the L-LMF of the target node is completed, and a location flow between the UE and the new LMF continues to be executed and completed.
Step 23: the L-LMF of the target node sends a location service terminating response message (Nlmf_Location_Determine) to the AMF entity/MME.
Step 24: the AMF entity/MME sends a location service terminating response message (Nlmf_Location_Provide) to the GMLC.
Step 25: the GMLC sends an LCS service response message to the external client to notify the external client of terminating the location service flow.

Based on the same inventive concept, an embodiment of the present application provides a device for selecting an LMF. The device is a device where an AMF entity/MME corresponding to a terminal in the process of moving across nodes is located. Since the device is the device in a method of an embodiment of the present application and the principle of solving problems of the device is similar to that of the method, implementation of the device may refer to implementation of the method, and repetitions are omitted.

The device includes: a processor and a memory. The memory stores a program code. When the program code is executed by the processor, the processor is configured to: determine to trigger updating of an LMF entity, and execute a process of selecting a new LMF entity; and execute a process of redirecting to the new LMF entity.

In a possible implementation, an original LMF entity is an L-LMF of a source node, and the processor is specifically configured to: determine to trigger updating of the LMF entity in a case of receiving a handover request message carrying information of an undergoing related location service flow and sent by the source node.

In a possible implementation, the processor is specifically configured to: select an L-LMF entity of a target node as the new LMF entity; and send the handover request message or an LMF redirection notification message carrying the information of the undergoing related location service flow to the L-LMF entity of the target node.

In a possible implementation, the processor is further specifically configured to: determine to complete a process of reselecting the LMF in a case of receiving a handover request confirming message returned by the L-LMF of the target node.

In a possible implementation, the processor is specifically configured to: select a CN-LMF entity as the new LMF entity; and send an LMF redirection request message carrying the information of the undergoing related location service flow to the CN-LMF entity.

In a possible implementation, the processor is further specifically configured to: determine to complete the process of selecting the new LMF entity in a case of receiving an LMF redirection response message carrying the information of the undergoing related location service flow and returned by the CN-LMF entity.

In a possible implementation, the processor is further specifically configured to: send a handover command message to the source node and notify the source node of the result of the selected new LMF entity.

In a possible implementation, the processor is further specifically configured to: notify the source node of the result of the selected new LMF entity in a case of determining that the terminal has not terminated the location service flow with the original LMF entity.

In a possible implementation, the original LMF entity is the CN-LMF, and the processor is specifically configured to: determine to trigger updating of the LMF entity after a handover request confirming message sent by the target node is received.

In a possible implementation, the processor is specifically configured to: select the L-LMF entity of the target node as the new LMF entity; send the LMF redirection request message carrying the information of the undergoing related location service flow to the original LMF entity; and send an LMF redirection notification message carrying the information of the undergoing related location service flow to the L-LMF entity of the target node after an LMF redirection response message returned by the original LMF entity is received.

In a possible implementation, the processor is specifically configured to: execute the process of selecting the new LMF entity is executed in a case of determining that the terminal has not terminated the location service flow with the original LMF entity.

In a possible implementation, the original LMF entity is the L-LMF of the source node, and the processor is specifically configured to: determine to trigger updating of the LMF entity in a case of receiving the LMF redirection notification message sent after the source node receives the handover request confirming message from the target node; or, determine to trigger updating of the LMF entity in a case of receiving the LMF redirection request message sent after the target node sends the handover request confirming message to the source node.

In a possible implementation, the processor is specifically configured to: select the L-LMF entity of the target node as the new LMF entity; and send an LMF redirection command message carrying the information of the undergoing related location service flow to the L-LMF entity of the target node, and send the LMF redirection notification message carrying the information of the undergoing related location service flow to the source node.

In a possible implementation, the processor is specifically configured to: determine to trigger updating of the LMF entity in a case of receiving the LMF redirection request message sent by the target node and determining that the terminal has not terminated the location service flow with the original LMF entity.

In a possible implementation, the processor is specifically configured to: send the LMF redirection command message to the L-LMF entity of the target node and send the LMF redirection notification message to the source node in a case of determining that the terminal has not terminated the location service flow with the original LMF entity.

In a possible implementation, the processor is specifically configured to: select the CN-LMF entity as the new LMF entity; and send the LMF redirection request message carrying the information of the undergoing related location service flow to the CN-LMF entity.

In a possible implementation, the processor is further specifically configured to: determine to complete the process of selecting the new LMF entity in a case of receiving the LMF redirection response message carrying the information of the undergoing related location service flow and returned by the CN-LMF entity.

In a possible implementation, the processor is specifically configured to: determine to trigger updating of the LMF entity in the case of receiving the LMF redirection notification message sent by the source node and determining that the terminal has not terminated the location service flow with the original LMF entity.

In a possible implementation, the processor is further specifically configured to: send the handover command message to the source node and notify the source node of the result of the selected new LMF entity.

In a possible implementation, the original LMF entity is the CN-LMF entity, and the processor is specifically configured to: determine to trigger updating of the LMF entity in a case of determining that the terminal accesses the target node or a path handover request message sent by the target node is received after the terminal accesses the target node.

In a possible implementation, the processor is specifically configured to: select the L-LMF entity of the target node as the new LMF entity; and send the LMF redirection notification message carrying the information of the undergoing related location service flow to the L-LMF entity of the target node; or, send the LMF redirection request message to the original LMF entity, and send a path handover response message carrying the information of the undergoing related location service flow to the L-LMF entity of the target node after the LMF redirection response message returned by the original LMF entity is received.

In a possible implementation, the processor is specifically configured to: send the handover command message to the source node in a case of determining that the terminal has terminated the location service flow with the original LMF entity.

In a possible implementation, the processor is further specifically configured to: send a response message of terminating a location service to a GMLC in a case of determining that the terminal has terminated the location service flow with the original LMF entity.

In a possible implementation, the processor is further specifically configured to: determine to complete redirection and notify the GMLC in a case of receiving a location response message returned by the new L-LMF entity.

Based on the same inventive concept, the present application provides another device for selecting an LMF. The device is a device where a source node is located in the process that a terminal moves across nodes. The device includes: a processor and a memory. The memory stores a program code, and when the program code is executed by the processor, the processor is configured to: execute a process of selecting an L-LMF of a target node as a new LMF entity in a case of determining that the terminal moves across the nodes; and execute a process of redirecting to the new LMF entity.

In a possible implementation, an original LMF entity is an L-LMF of the source node or a CN-LMF entity, and the processor is specifically configured to: send a handover request message or an LMF redirection notification message carrying an undergoing related location service flow to the L-LMF of the target node.

In a possible implementation, the original LMF entity is the L-LMF of the source node, and the processor is further specifically configured to: send the LMF redirection notification message carrying the undergoing related location service flow to an AMF entity/MME.

In a possible implementation, the processor is further specifically configured to: receive a handover request confirming message returned by the L-LMF of the target node; or, receive an LMF redirection notification message returned after the AMF entity/MME receives an LMF redirection request sent by the L-LMF entity of the target node.

Based on the same inventive concept, the present application provides a final device for selecting an LMF. The device is a device where a node, where a new LMF entity is located, is located in the process that a terminal moves across nodes. The device includes: a processor and a memory. The memory stores a program code, and when the program code is executed by the processor, the processor is configured to execute: receiving a message requesting to use an L-LMF as the new LMF entity; and determining the L-LMF as the new LMF entity, and sending a response message carrying an undergoing related location service flow.

In a possible implementation, the node is a target node, and the processor is specifically configured to: receive the message requesting to use the L-LMF as the new LMF entity from an AMF entity/MME/source node.

In a possible implementation, the processor is specifically configured to: send the response message carrying the undergoing related location service flow to the AMF entity/MME/source node.

In a possible implementation, the processor is further specifically configured to: send a message carrying the undergoing related location service flow to the AMF entity/MME; and receive a response message returned by the AMF entity/MME.

In a possible implementation, the node is a core network node, and the processor is specifically configured to: receive the message requesting to use the L-LMF as the new LMF entity sent by the AMF entity/MME.

In a possible implementation, the processor is specifically configured to: send the response message carrying the undergoing related location service flow to the AMF entity/MME.

Based on the same inventive concept, the present application provides a first device for selecting an LMF. The first device is a device where an AMF entity/MME corresponding to a terminal in the process of moving across nodes is located. Since the device is the device in the method of the embodiment of the present application and the principle of solving problems of the device is similar to that of the method, implementation of the device may refer to implementation of the method, and repetitions are omitted.

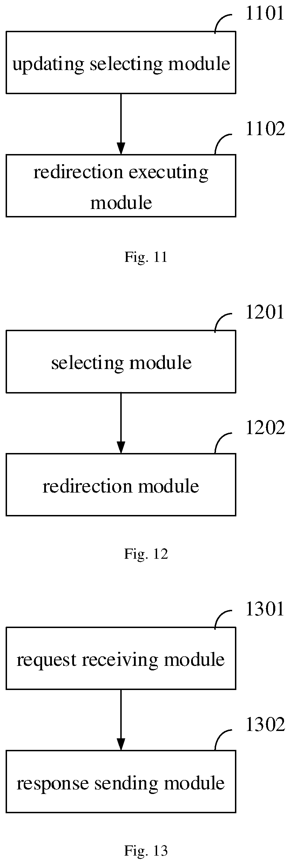

As shown in Fig. 11, the first device includes: an updating selecting module 1101, and a redirection executing module 1102. The updating selecting module 1101 is configured to determine to trigger updating of an LMF entity, and execute a process of selecting a new LMF entity; and the redirection executing module 1102 is configured to execute a process of redirecting to the new LMF entity.

As an optional implementation, the updating selecting module 1101 is specifically configured to: determine to trigger updating of the LMF entity in a case of receiving a handover request message carrying information of an undergoing related location service flow and sent by a source node.

As an optional implementation, the redirection executing module 1102 is specifically configured to: select an L-LMF entity of a target node as the new LMF entity; and send the handover request message or an LMF redirection notification message carrying the information of the undergoing related location service flow to the L-LMF entity of the target node.

As an optional implementation, the first device further includes a first completion determining module which is configured to: determine to complete a process of reselecting the LMF in a case of receiving a handover request confirming message returned by the L-LMF of the target node.

As an optional implementation, the redirection executing module 1102 is specifically configured to: select a CN-LMF entity as the new LMF entity; and send an LMF redirection request message carrying the information of the undergoing related location service flow to the CN-LMF entity.

As an optional implementation, the first device further includes a second completion determining module which is configured to: determine to complete the process of selecting the new LMF entity in a case of receiving an LMF redirection response message carrying the information of the undergoing related location service flow and returned by the CN-LMF entity.

As an optional implementation, the first device further includes a first handover notification module which is configured to: send a handover command message to the source nodeand notify the source node of the result of the selected new LMF entity.

As an optional implementation, the first handover notification module is specifically configured to: notify the source node of the result of the selected new LMF entity in a case of determining that the terminal has not terminated the location service flow with an original LMF entity.

As an optional implementation, the original LMF entity is the CN-LMF, and the updating selecting module 1101 is specifically configured to: determine to trigger updating of the LMF entity after a handover request confirming message sent by the target node is received.

As an optional implementation, the redirection executing module 1102 is specifically configured to: select the L-LMF entity of the target node as the new LMF entity; send the LMF redirection request message carrying the information of the undergoing related location service flow to the original LMF entity; and send an LMF redirection notification message carrying the information of the undergoing related location service flow to the L-LMF entity of the target node after an LMF redirection response message returned by the original LMF entity is received.

As an optional implementation, the updating selecting module 1101 is specifically configured to: execute the process of selecting the new LMF entity in a case of determining that the terminal has not terminated the location service flow with the original LMF entity.

As an optional implementation, the original LMF entity is the L-LMF of the source node, and the updating selecting module 1101 is specifically configured to: determine to trigger updating of the LMF entity in a case of receiving the LMF redirection notification message sent after the source node receives the handover request confirming message from the target node; or, determine to trigger updating of the LMF entity in a case of receiving the LMF redirection request message sent after the target node sends the handover request confirming message to the source node.

As an optional implementation, the updating selecting module 1101 is specifically configured to: select the L-LMF entity of the target node as the new LMF entity; send an LMF redirection command message carrying the information of the undergoing related location service flow to the L-LMF entity of the target node; and send the LMF redirection notification message carrying the information of the undergoing related location service flow to the source node.

As an optional implementation, the updating selecting module 1101 is specifically configured to: determine to trigger updating of the LMF entity in a case of receiving the LMF redirection request message sent by the target node and determining that the terminal has not terminated the location service flow with the original LMF entity.

As an optional implementation, the updating selecting module 1101 is specifically configured to: send the LMF redirection command message to the L-LMF entity of the target node and send the LMF redirection notification message to the source node in a case of determining that the terminal has not terminated the location service flow with the original LMF entity.

As an optional implementation, the updating selecting module 1101 is specifically configured to: select the CN-LMF entity as the new LMF entity; and send the LMF redirection request message carrying the information of the undergoing related location service flow to the CN-LMF entity.

As an optional implementation, the first device further includes a third completion determining module which is specifically configured to: determine to complete the process of selecting the new LMF entity in a case of receiving the LMF redirection response message carrying the information of the undergoing related location service flow and returned by the CN-LMF entity.

As an optional implementation, the updating selecting module 1101 is specifically configured to: determine to trigger updating of the LMF entity in the case of receiving the LMF redirection notification message sent by the source node and determining that the terminal has not terminated the location service flow with the original LMF entity.

As an optional implementation, the first device further includes a second handover notification module which is specifically configured to: send the handover command message to the source node and notify the source node of the result of the selected new LMF entity.

As an optional implementation, the original LMF entity is the CN-LMF entity, and the updating selecting module 1101 is specifically configured to: determine to trigger updating of the LMF entity in a case of determining that the terminal accesses the target node or a path handover request message sent by the target node is received after the terminal accesses the target node.

As an optional implementation, the updating selecting module 1101 is specifically configured to: select the L-LMF entity of the target node as the new LMF entity; and send the LMF redirection notification message carrying the information of the undergoing related location service flow to the L-LMF entity of the target node; or, send the LMF redirection request message to the original LMF entity, and send a path handover response message carrying the information of the undergoing related location service flow to the L-LMF entity of the target node after the LMF redirection response message returned by the original LMF entity is received.

As an optional implementation, the first device further includes a handover command module which is specifically configured to: send the handover command message to the source node in a case of determining that the terminal has terminated the location service flow with the original LMF entity.

As an optional implementation, the first device further includes a terminating module which is configured to: send a response message of terminating a location service to a GMLC in a case of determining that the terminal has terminated the location service flow with the original LMF entity.

As an optional implementation, the first device further includes a redirection completion notification module which is configured to: determine to complete redirection and notify the GMLC in a case of receiving a location response message returned by the new L-LMF entity.

The present application provides a second device for selecting an LMF. The second device is a device where a source node is located in the process that a terminal moves across nodes. As shown in Fig. 12, the second device includes: a selecting module 1201 and a redirection module 1202. The selecting module 1201 is configured to execute a process of selecting an L-LMF of a target node as a new LMF entity in a case of determining that the terminal moves across the nodes; and the redirection module 1202 is configured to execute a process of redirecting to the new LMF entity.

As an optional implementation, an original LMF entity is an L-LMF of the source node or a CN-LMF entity, and the selecting module 1201 is specifically configured to: send a handover request message or an LMF redirection notification message carrying an undergoing related location service flow to the L-LMF of the target node.

As an optional implementation, the original LMF entity is the L-LMF of the source node, and the second device further includes a sending module which is configured to: send the LMF redirection notification message carrying the undergoing related location service flow to an AMF entity/MME.

As an optional implementation, the second device further includes a receiving module which is configured to: receive a handover request confirming message returned by the L-LMF of the target node; or, receive an LMF redirection notification message returned after the AMF entity/MME receives an LMF redirection request sent by the L-LMF entity of the target node.

The present application provides a third device for selecting an LMF. The third device is a device where a node, where a new LMF entity is located, is located in the process that a terminal moves across nodes. As shown in Fig. 13, the third device includes: a request receiving module 1301 and a response sending module 1302. The request receiving module 1301 is configured to receive a message requesting to use an L-LMF as the new LMF entity; and the response sending module 1302 is configured to determine the L-LMF as the new LMF entity, and send a response message carrying an undergoing related location service flow.

As an optional implementation, the node is a target node, and the request receiving module 1301 is specifically configured to: receive the message requesting to use the L-LMF as the new LMF entity from an AMF entity/MME/source node.

As an optional implementation, the response sending module 1302 is specifically configured to: send the response message carrying the undergoing related location service flow to the AMF entity/MME/source node.

As an optional implementation, the third device further includes a transceiving module which is configured to: send a message carrying the undergoing related location service flow to the AMF entity/MME; and receive a response message returned by the AMF entity/MME.

As an optional implementation, the node is a core network node, and the request receiving module 1301 is specifically configured to: receive the message requesting to use the L-LMF as the new LMF entity sent by the AMF entity/MME.

As an optional implementation, the response sending module 1302 is specifically configured to: send the response message carrying the undergoing related location service flow to the AMF entity/MME.

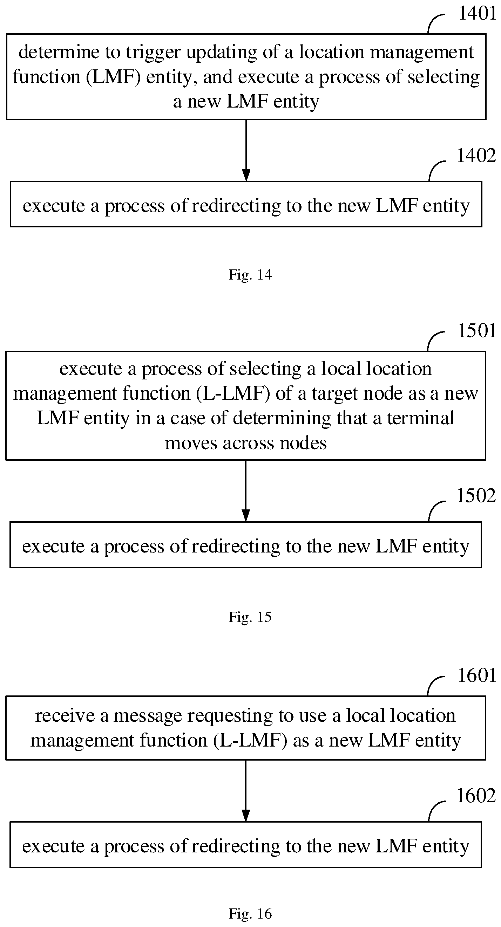

The present application provides a method for selecting an LMF, applied to an AMF entity/MME corresponding to a terminal in the process of moving across nodes. As shown in Fig. 14, the method includes: step 1401, determining to trigger updating of an LMF entity, and executing a process of selecting a new LMF entity; and step 1402, executing a process of redirecting to the new LMF entity.

In a possible implementation, an original LMF entity is an L-LMF entity of a source node; and the determining to trigger updating of the LMF entity includes: determining to trigger updating of the LMF entity in a case of receiving a handover request message carrying information of an undergoing related location service flow and sent by the source node.

In a possible implementation, the executing the process of selecting the new LMF entity includes: selecting an L-LMF entity of a target node as the new LMF entity; and sending the handover request message or an LMF redirection notification message carrying the information of the undergoing related location service flow to the L-LMF entity of the target node.

In a possible implementation, the method further includes: determining to complete a process of reselecting the LMF in a case of receiving a handover request confirming message returned by the L-LMF of the target node.

In a possible implementation, the executing the process of selecting the new LMF entity includes: selecting a CN-LMF entity as the new LMF entity; and sending an LMF redirection request message carrying the information of the undergoing related location service flow to the CN-LMF entity.

In a possible implementation, the method further includes: determining to complete the process of selecting the new LMF entity in a case of receiving an LMF redirection response message carrying the information of the undergoing related location service flow and returned by the CN-LMF entity.

In a possible implementation, the method further includes: sending a handover command message to the source node and notifying the source node of the result of the selected new LMF entity.

In a possible implementation, the notifying the source node of the result of the selected new LMF entity includes: notifying the source node of the result of the selected new LMF entity in a case of determining that the terminal has not terminated the location service flow with the original LMF entity.

In a possible implementation, the original LMF entity is the CN-LMF; and the determining to trigger updating of the LMF entity includes: determining to trigger updating of the LMF entity after a handover request confirming message sent by the target node is received.

In a possible implementation, the executing the process of selecting the new LMF entity includes: selecting the L-LMF entity of the target node as the new LMF entity; sending the LMF redirection request message carrying the information of the undergoing related location service flow to the original LMF entity; and sending an LMF redirection notification message carrying the information of the undergoing related location service flow to the L-LMF entity of the target node after an LMF redirection response message returned by the original LMF entity is received.

In a possible implementation, the executing the process of selecting the new LMF entity includes: executing the process of selecting the new LMF entity in a case of determining that the terminal has not terminated the location service flow with the original LMF entity.

In a possible implementation, the original LMF entity is the L-LMF of the source node; and the determining to trigger updating of the LMF entity includes: determining to trigger updating of the LMF entity in a case of receiving the LMF redirection notification message sent after the source node receives the handover request confirming message from the target node; or, determining to trigger updating of the LMF entity in a case of receiving the LMF redirection request message sent after the target node sends the handover request confirming message to the source node.

In a possible implementation, the executing the process of selecting the new LMF entity includes: selecting the L-LMF entity of the target node as the new LMF entity; sending an LMF redirection command message carrying the information of the undergoing related location service flow to the L-LMF entity of the target node; and sending the LMF redirection notification message carrying the information of the undergoing related location service flow to the source node.

In a possible implementation, the determining to trigger updating of the LMF entity in the case of receiving the LMF redirection request message sent by the target node, includes: determining to trigger updating of the LMF entity in a case of receiving the LMF redirection request message sent by the target node and determining that the terminal has not terminated the location service flow with the original LMF entity.

In a possible implementation, the sending the LMF redirection command message to the L-LMF entity of the target node and sending the LMF redirection notification message to the source node, include: sending the LMF redirection command message to the L-LMF entity of the target node and sending the LMF redirection notification message to the source node in a case of determining that the terminal has not terminated the location service flow with the original LMF entity.

In a possible implementation, the executing the process of selecting the new LMF entity includes: selecting the CN-LMF entity as the new LMF entity; and sending the LMF redirection request message carrying the information of the undergoing related location service flow to the CN-LMF entity.

In a possible implementation, the method further includes: determining to complete the process of selecting the new LMF entity in a case of receiving the LMF redirection response message carrying the information of the undergoing related location service flow and returned by the CN-LMF entity.

In a possible implementation, the determining to trigger updating of the LMF entity in the case of receiving the LMF redirection notification message sent by the source node, includes: determining to trigger updating of the LMF entity in the case of receiving the LMF redirection notification message sent by the source node and determining that the terminal has not terminated the location service flow with the original LMF entity.

In a possible implementation, the method further includes: sending the handover command message to the source node and notifying the source node of the result of the selected new LMF entity.

In a possible implementation, the original LMF entity is the CN-LMF entity; and the determining to trigger updating of the LMF entity includes: determining to trigger updating of the LMF entity in a case of determining that the terminal accesses the target node or a path handover request message sent by the target node is received after the terminal accesses the target node.

In a possible implementation, the executing the process of selecting the new LMF entity includes: selecting the L-LMF entity of the target node as the new LMF entity; and sending the LMF redirection notification message carrying the information of the undergoing related location service flow to the L-LMF entity of the target node; or, sending the LMF redirection request message to the original LMF entity, and sending a path handover response message carrying the information of the undergoing related location service flow to the L-LMF entity of the target node after the LMF redirection response message returned by the original LMF entity is received.

In a possible implementation, before it is determined to trigger updating of the LMF entity, the method further includes: sending the handover command message to the source node in a case of determining that the terminal has terminated the location service flow with the original LMF entity.

In a possible implementation, the method further includes: sending a response message of terminating a location service to a GMLC in a case of determining that the terminal has terminated the location service flow with the original LMF entity.

In a possible implementation, the method further includes: determining to complete redirection and notifying the GMLC in a case of receiving a location response message returned by the new L-LMF entity.

The present application provides a method for selecting an LMF. The method is applied to a source node in the process that a terminal moves across nodes. As shown in Fig. 15, the method includes: step 1501, executing a process of selecting an L-LMF of a target node as a new LMF entity in a case of determining that the terminal moves across the nodes; and step 1502, executing a process of redirecting to the new LMF entity.

In a possible implementation, an original LMF entity is an L-LMF of the source node or a CN-LMF entity; and the executing the process of selecting the new LMF entity includes: sending a handover request message or an LMF redirection notification message carrying an undergoing related location service flow to the L-LMF of the target node.

In a possible implementation, the original LMF entity is the L-LMF of the source node, and after the handover request message or the LMF redirection notification message carrying the undergoing related location service flow is sent to the L-LMF of the target node, the method further includes: sending the LMF redirection notification message carrying the undergoing related location service flow to an AMF entity/MME.

In a possible implementation, the method further includes: receiving a handover request confirming message returned by the L-LMF of the target node; or, receiving an LMF redirection notification message returned after the AMF entity/MME receives an LMF redirection request sent by the L-LMF entity of the target node.

The present application provides a method for selecting an LMF. The method is applied to a node where a new LMF entity is located in the process that a terminal moves across nodes. As shown in Fig. 16, the method includes: step 1601, receiving a message requesting to use an L-LMF as the new LMF entity; and step 1602, determining the L-LMF as the new LMF entity, and sending a response message carrying an undergoing related location service flow.

In a possible implementation, the node is a target node; and the receiving the message requesting to use the L-LMF as the new LMF entity includes: receiving the message requesting to use the L-LMF as the new LMF entity from an AMF entity/MME/source node.

In a possible implementation, the sending the response message carrying the undergoing related location service flow includes: sending the response message carrying the undergoing related location service flow to the AMF entity/MME/source node.

In a possible implementation, in a case of receiving the message requesting to use the L-LMF as the new LMF entity sent by the source node, the method further includes: sending a message carrying the undergoing related location service flow to the AMF entity/MME; and sending a response message returned by the AMF entity/MME.

In a possible implementation, the node is a core network node; and the receiving the message requesting to use the L-LMF as the new LMF entity includes: receiving the message requesting to use the L-LMF as the new LMF entity sent by the AMF entity/MME.

In a possible implementation, the sending the response message carrying the undergoing related location service flow includes: sending the response message carrying the undergoing related location service flow to the AMF entity/MME.

An embodiment of the present application further provides a first computer readable non-volatile storage medium, applied to an AMF entity/MME corresponding to a terminal in the process of moving across nodes. The first computer readable non-volatile storage medium includes a program code. When the program code runs on a computing terminal, the program code is used to make the computing terminal execute the following steps: updating of an LMF entity is determined to be triggered, and a process of selecting a new LMF entity is executed; and a process of redirecting to the new LMF entity is executed.

An embodiment of the present application further provides a second computer readable non-volatile storage medium, applied to a source node in the process that a terminal moves across nodes. The second computer readable non-volatile storage medium includes a program code. When the program code runs on a computing terminal, the program code is used to make the computing terminal execute the following steps: a process of selecting an L-LMF of a target node as a new LMF entity is executed in a case of determining that the terminal moves across the nodes; and a process of redirecting to the new LMF entity is executed.

An embodiment of the present application further provides a third computer readable non-volatile storage medium, applied to a node where a new LMF entity is located in the process that a terminal moves across nodes. The third computer readable non-volatile storage medium includes a program code. When the program code runs on a computing terminal, the program code is used to make the computing terminal execute: receiving a message requesting to use an L-LMF as the new LMF entity; and determining the L-LMF as the new LMF entity, and sending a response message carrying an undergoing related location service flow.

Those skilled in the art should understand that the embodiments of the present application may be provided as methods, systems or computer program products. Therefore, the present application may adopt a form of full hardware embodiments, full software embodiments, or an embodiment combining software and hardware aspects. Moreover, the present application may adopt a form of the computer program products implemented on one or more computer available storage mediums (including but not limited to a disk memory, an optical memory and the like) containing a computer available program code.

The present application is described with reference to flow charts and/or block diagrams of the methods, the devices (systems), and the computer program products according to the embodiments of the present application. It should be understood that each flow and/or block in the flow charts and/or the block diagrams and combinations of the flows and/or the blocks in the flow charts and/or the block diagrams may be implemented by computer program instructions. The computer program instructions may be provided to a processor of a general-purpose computer, a special-purpose computer, an embedded processing machine or other programmable data processing devices, thereby generating a machine, such that the instructions, when executed by the processor of the computer or the other programmable data processing devices, generate a device for implementing functions specified in one or more flows in the flow charts and/or one or more blocks in the block diagrams.

The computer program instructions may also be stored in a computer readable memory which can guide the computer or the other programmable data processing devices to work in a specific mode, thus the instructions stored in the computer readable memory generate an article of manufacture that includes a commander device that implements the functions specified in one or more flows in the flow charts and/or one or more blocks in the block diagrams.

The computer program instructions may also be loaded to the computer or the other programmable data processing devices, so that a series of operating steps may be executed on the computer or the other programmable devices to generate computer-implemented processing, such that the instructions executed on the computer or the other programmable devices provide steps for implementing the functions specified in one or more flows in the flow charts and/or one or more blocks in the block diagrams.

Obviously, those skilled in the art can make various modifications and variations to the present application without departing from the spirit and scope of the present application. In this way, if these modifications and variations of the present application fall within the scope of the claims of the present application and their equivalent art, the present application also intends to include these modifications and variations.

## Claims

1. A method for selecting a location management function, LMF, applied to an access and mobility management function, AMF, entity/mobility management entity, MME, corresponding to a terminal in a process of moving across nodes, and comprising:
determining to trigger updating of an LMF entity, and executing a process of selecting a new LMF entity; and
executing a process of redirecting to the new LMF entity.

2. The method according to claim 1, wherein an original LMF entity is a local location management function, L-LMF, entity of a source node;
wherein the determining to trigger updating of the LMF entity comprises:
determining to trigger updating of the LMF entity in a case of receiving a handover request message carrying information of an undergoing related location service flow and sent by the source node.

3. The method according to claim 2, wherein the executing the process of selecting the new LMF entity comprises:
selecting an L-LMF entity of a target node as the new LMF entity; and
sending the handover request message or an LMF redirection notification message carrying the information of the undergoing related location service flow to the L-LMF entity of the target node.

4. The method according to claim 3, further comprising:
determining to complete a process of reselecting the LMF in a case of receiving a handover request confirming message returned by the L-LMF of the target node.

5. The method according to claim 2, wherein the executing the process of selecting the new LMF entity comprises:
selecting a core network location management function, CN-LMF, entity as the new LMF entity; and
sending an LMF redirection request message carrying the information of the undergoing related location service flow to the CN-LMF entity.

6. The method according to claim 5, further comprising:
determining to complete the process of selecting the new LMF entity in a case of receiving an LMF redirection response message carrying the information of the undergoing related location service flow and returned by the CN-LMF entity.

7. The method according to claim 3 or 5, further comprising:
sending a handover command message to the source node and notifying the source node of a result of the selected new LMF entity.

8. The method according to claim 7, wherein the notifying the source node of the result of the selected new LMF entity comprises:
notifying the source node of the result of the selected new LMF entity in a case of determining that the terminal has not terminated a location service flow with the original LMF entity.

9. The method according to claim 1, wherein an original LMF entity is a CN-LMF;
wherein the determining to trigger updating of the LMF entity comprises:
determining to trigger updating of the LMF entity after a handover request confirming message sent by a target node is received.

10. The method according to claim 9, wherein the executing the process of selecting the new LMF entity comprises:
selecting an L-LMF entity of the target node as the new LMF entity;
sending an LMF redirection request message carrying information of an undergoing related location service flow to the original LMF entity; and
sending an LMF redirection notification message carrying the information of the undergoing related location service flow to the L-LMF entity of the target node after an LMF redirection response message returned by the original LMF entity is received.

11. The method according to claim 10, wherein the executing the process of selecting the new LMF entity comprises:
executing the process of selecting the new LMF entity in a case of determining that the terminal has not terminated a location service flow with the original LMF entity.

12. The method according to claim 1, wherein an original LMF entity is an L-LMF of a source node;
where the determining to trigger updating of the LMF entity comprises:
determining to trigger updating of the LMF entity in a case of receiving an LMF redirection notification message sent after the source node receives a handover request confirming message from a target node; or
determining to trigger updating of the LMF entity in a case of receiving an LMF redirection request message sent after the target node sends the handover request confirming message to the source node.

13. The method according to claim 12, wherein the executing the process of selecting the new LMF entity comprises:
selecting an L-LMF entity of the target node as the new LMF entity;
sending an LMF redirection command message carrying information of an undergoing related location service flow to the L-LMF entity of the target node; and
sending the LMF redirection notification message carrying the information of the undergoing related location service flow to the source node.

14. The method according to claim 13, wherein the determining to trigger updating of the LMF entity in the case of receiving the LMF redirection request message sent by the target node, comprises:
determining to trigger updating of the LMF entity in a case of receiving the LMF redirection request message sent by the target node and determining that the terminal has not terminated a location service flow with the original LMF entity.

15. The method according to claim 13, wherein the sending the LMF redirection command message to the L-LMF entity of the target node and sending the LMF redirection notification message to the source node, comprise:
sending the LMF redirection command message to the L-LMF entity of the target node and sending the LMF redirection notification message to the source node in a case of determining that the terminal has not terminated a location service flow with the original LMF entity.

16. The method according to claim 12, wherein the executing the process of selecting the new LMF entity comprises:
selecting a CN-LMF entity as the new LMF entity; and
sending an LMF redirection request message carrying information of an undergoing related location service flow to the CN-LMF entity.

17. The method according to claim 16, further comprising:
determining to complete the process of selecting the new LMF entity in a case of receiving an LMF redirection response message carrying the information of the undergoing related location service flow and returned by the CN-LMF entity.

18. The method according to claim 16, wherein the determining to trigger updating of the LMF entity in the case of receiving the LMF redirection notification message sent by the source node, comprises:
determining to trigger updating of the LMF entity in the case of receiving the LMF redirection notification message sent by the source node and determining that the terminal has not terminated a location service flow with the original LMF entity.

19. The method according to claim 16, further comprising:
sending a handover command message to the source node and notifying the source node of a result of the selected new LMF entity.

20. The method according to claim 1, wherein an original LMF entity is a CN-LMF entity;
wherein the determining to trigger updating of the LMF entity comprises:
determining to trigger updating of the LMF entity in a case of determining that the terminal accesses a target node or a path handover request message sent by the target node is received after the terminal accesses the target node.

21. The method according to claim 20, wherein the executing the process of selecting the new LMF entity comprises:
selecting an L-LMF entity of the target node as the new LMF entity; and
sending an LMF redirection notification message carrying information of an undergoing related location service flow to the L-LMF entity of the target node; or,
sending an LMF redirection request message to the original LMF entity, and sending a path handover response message carrying the information of the undergoing related location service flow to the L-LMF entity of the target node after an LMF redirection response message returned by the original LMF entity is received.

22. The method according to claim 21, wherein before determining to trigger updating of the LMF entity, the method further comprises:
sending a handover command message to the source node in a case of determining that the terminal has terminated a location service flow with the original LMF entity.

23. The method according to claim 1, further comprising:
sending a response message of terminating a location service to a gateway mobile location centre, GMLC, in a case of determining that the terminal has terminated a location service flow with an original LMF entity.

24. The method according to claim 1, further comprising:
determining to complete redirection and notifying a GMLC in a case of receiving a location response message returned by the new L-LMF entity.

25. A method for selecting a location management function, LMF, applied to a source node in a process that a terminal moves across nodes, and comprising:
executing a process of selecting a local location management function, L-LMF, of a target node as a new LMF entity in a case of determining that the terminal moves across the nodes; and
executing a process of redirecting to the new LMF entity.

26. The method according to claim 25, wherein an original LMF entity is an L-LMF of the source node or a core network location management function, CN-LMF, entity;
wherein the executing the process of selecting the new LMF entity comprises:
sending a handover request message or an LMF redirection notification message carrying an undergoing related location service flow to the L-LMF of the target node.

27. The method according to claim 26, wherein the original LMF entity is the L-LMF of the source node, and after the handover request message or the LMF redirection notification message carrying the undergoing related location service flow is sent to the L-LMF of the target node, the method further comprises:
sending the LMF redirection notification message carrying the undergoing related location service flow to an access and mobility management function, AMF, entity/mobility management entity, MME.

28. The method according to claim 26 or 27, further comprising:
receiving a handover request confirming message returned by the L-LMF of the target node; or
receiving the LMF redirection notification message returned after the AMF entity/MME receives an LMF redirection request sent by the L-LMF entity of the target node.

29. A method for selecting a location management function, LMF, applied to a node where a new LMF entity is located in a process that a terminal moves across nodes, and comprising:
receiving a message requesting to use a local location management function, L-LMF, as the new LMF entity; and
determining the L-LMF as the new LMF entity, and sending a response message carrying an undergoing related location service flow.

30. The method according to claim 29, wherein the node is a target node;
wherein the receiving the message requesting to use the L-LMF as the new LMF entity comprises:
receiving the message requesting to use the L-LMF as the new LMF entity from an access and mobility management function, AMF, entity/mobility management entity, MME/source node.

31. The method according to claim 30, wherein the sending the response message carrying the undergoing related location service flow comprises:
sending the response message carrying the undergoing related location service flow to the AMF entity/MME/source node.

32. The method according to claim 30, wherein in a case of receiving the message requesting to use the L-LMF as the new LMF entity sent by the source node, the method further comprises:
sending a message carrying the undergoing related location service flow to the AMF entity/MME; and
receiving a response message returned by the AMF entity/MME.

33. The method according to claim 29, wherein the node is a core network node;
wherein the receiving the message requesting to use the L-LMF as the new LMF entity comprises:
receiving the message requesting to use the L-LMF as the new LMF entity sent by the AMF entity/MME.

34. The method according to claim 32, wherein the sending the response message carrying the undergoing related location service flow comprises:
sending the response message carrying the undergoing related location service flow to the AMF entity/MME.

35. A device for selecting a location management function, LMF, being a device where an access and mobility management function, AMF, entity/mobility management entity, MME, corresponding to a terminal in a process of moving across nodes is located, wherein the device comprises:
a processor; and
a memory; wherein the memory stores a program code, and when the program code is executed by the processor, the processor is configured to:
determine to trigger updating of an LMF entity, and execute a process of selecting a new LMF entity; and
execute a process of redirecting to the new LMF entity.

36. The device according to claim 35, wherein an original LMF entity is a local location management function, L-LMF, entity of a source node;
wherein the processor is specifically configured to:
determine to trigger updating of the LMF entity in a case of receiving a handover request message carrying information of an undergoing related location service flow and sent by the source node.

37. The device according to claim 36, wherein the processor is specifically configured to:
select an L-LMF entity of a target node as the new LMF entity; and
send the handover request message or an LMF redirection notification message carrying the information of the undergoing related location service flow to the L-LMF entity of the target node.

38. The device according to claim 37, wherein the processor is further specifically configured to:
determine to complete a process of reselecting the LMF in a case of receiving a handover request confirming message returned by the L-LMF of the target node.

39. The device according to claim 36, wherein the processor is specifically configured to:
select a core network location management function, CN-LMF, entity as the new LMF entity; and
send an LMF redirection request message carrying the information of the undergoing related location service flow to the CN-LMF entity.

40. The device according to claim 39, wherein the processor is further specifically configured to:
determine to complete the process of selecting the new LMF entity in a case of receiving an LMF redirection response message carrying the information of the undergoing related location service flow and returned by the CN-LMF entity.

41. The device according to claim 37 or 39, wherein the processor is further specifically configured to:
send a handover command message to the source node and notify the source node of a result of the selected new LMF entity.

42. The device according to claim 41, wherein the processor is specifically configured to:
notify the source node of the result of the selected new LMF entity in a case of determining that the terminal has not terminated a location service flow with the original LMF entity.

43. The device according to claim 35, wherein an original LMF entity is a CN-LMF, and the processor is specifically configured to:
determine to trigger updating of the LMF entity after a handover request confirming message sent by a target node is received.

44. The device according to claim 43, wherein the processor is specifically configured to:
select an L-LMF entity of the target node as the new LMF entity;
send an LMF redirection request message carrying information of an undergoing related location service flow to the original LMF entity; and
send an LMF redirection notification message carrying the information of the undergoing related location service flow to the L-LMF entity of the target node after an LMF redirection response message returned by the original LMF entity is received.

45. The device according to claim 44, wherein the processor is specifically configured to:
execute the process of selecting the new LMF entity in a case of determining that the terminal has not terminated a location service flow with the original LMF entity.

46. The device according to claim 35, wherein an original LMF entity is an L-LMF of a source node, and the processor is specifically configured to:
determine to trigger updating of the LMF entity in a case of receiving an LMF redirection notification message sent after the source node receives a handover request confirming message from a target node; or
determine to trigger updating of the LMF entity in a case of receiving an LMF redirection request message sent after the target node sends the handover request confirming message to the source node.

47. The device according to claim 46, wherein the processor is specifically configured to:
select an L-LMF entity of the target node as the new LMF entity;
send an LMF redirection command message carrying information of an undergoing related location service flow to the L-LMF entity of the target node; and
send the LMF redirection notification message carrying the information of the undergoing related location service flow to the source node.

48. The device according to claim 47, wherein the processor is specifically configured to:
determine to trigger updating of the LMF entity in a case of receiving the LMF redirection request message sent by the target node and determining that the terminal has not terminated a location service flow with the original LMF entity.

49. The device according to claim 47, wherein the processor is specifically configured to:
send the LMF redirection command message to the L-LMF entity of the target node and send the LMF redirection notification message to the source node in a case of determining that the terminal has not terminated a location service flow with the original LMF entity.

50. The device according to claim 46, wherein the processor is specifically configured to:
select a CN-LMF entity as the new LMF entity; and
send an LMF redirection request message carrying information of an undergoing related location service flow to the CN-LMF entity.

51. The device according to claim 50, wherein the processor is further specifically configured to:
determine to complete the process of selecting the new LMF entity in a case of receiving an LMF redirection response message carrying the information of the undergoing related location service flow and returned by the CN-LMF entity.

52. The device according to claim 50, wherein the processor is specifically configured to:
determine to trigger updating of the LMF entity in the case of receiving the LMF redirection notification message sent by the source node and determining that the terminal has not terminated the location service flow with the original LMF entity.

53. The device according to claim 50, wherein the processor is further specifically configured to:
send a handover command message to the source node and notify the source node of a result of the selected new LMF entity.

54. The device according to claim 35, wherein an original LMF entity is a CN-LMF entity, and the processor is specifically configured to:
determine to trigger updating of the LMF entity in a case of determining that the terminal accesses a target node or a path handover request message sent by the target node is received after the terminal accesses the target node.

55. The device according to claim 54, wherein the processor is specifically configured to:
select an L-LMF entity of the target node as the new LMF entity; and
send an LMF redirection notification message carrying information of an undergoing related location service flow to the L-LMF entity of the target node; or,
send an LMF redirection request message to the original LMF entity, and send a path handover response message carrying the information of the undergoing related location service flow to the L-LMF entity of the target node after an LMF redirection response message returned by the original LMF entity is received.

56. The device according to claim 55, wherein the processor is further specifically configured to:
send a handover command message to the source node in a case of determining that the terminal has terminated a location service flow with the original LMF entity.

57. The device according to claim 35, wherein the processor is further specifically configured to:
send a response message of terminating a location service to a gateway mobile location centre, GMLC, in a case of determining that the terminal has terminated a location service flow with an original LMF entity.

58. The device according to claim 35, wherein the processor is further specifically configured to:
determine to complete redirection and notify a GMLC in a case of receiving a location response message returned by the new L-LMF entity.

59. A device for selecting a location management function, LMF, being a device where a source node is located in a process that a terminal moves across nodes, wherein the device comprises:
a processor; and
a memory; wherein the memory stores a program code, and when the program code is executed by the processor, the processor is configured to:
execute a process of selecting a local location management function, L-LMF, of a target node as a new LMF entity in a case of determining that the terminal moves across the nodes; and
execute a process of redirecting to the new LMF entity.

60. The device according to claim 59, wherein an original LMF entity is an L-LMF of the source node or a core network location management function, CN-LMF, entity;
wherein the processor is specifically configured to:
send a handover request message or an LMF redirection notification message carrying an undergoing related location service flow to the L-LMF of the target node.

61. The device according to claim 60, wherein the original LMF entity is the L-LMF of the source node, and the processor is further specifically configured to:
send the LMF redirection notification message carrying the undergoing related location service flow to an access and mobility management function, AMF, entity/mobility management entity, MME.

62. The device according to claim 60 or 61, wherein the processor is further specifically configured to:
receive a handover request confirming message returned by the L-LMF of the target node; or
receive the LMF redirection notification message returned after the AMF entity/MME receives an LMF redirection request sent by the L-LMF entity of the target node.

63. A device for selecting a location management function, LMF, being a device where a node, where a new LMF entity is located, is located in a process that a terminal moves across nodes, wherein the device comprises:
a processor; and
a memory; wherein the memory stores a program code, and when the program code is executed by the processor, the processor is configured to execute:
receiving a message requesting to use a local location management function, L-LMF, as the new LMF entity; and
determining the L-LMF as the new LMF entity, and sending a response message carrying an undergoing related location service flow.

64. The device according to claim 63, wherein the node is a target node, and the processor is specifically configured to:
receive the message requesting to use the L-LMF as the new LMF entity from an access and mobility management function, AMF, entity/mobility management entity, MME/source node.

65. The device according to claim 64, wherein the processor is further configured to:
send the response message carrying the undergoing related location service flow to the AMF entity/MME/source node.

66. The device according to claim 64, wherein the processor is further specifically configured to:
send a message carrying the undergoing related location service flow to the AMF entity/MME; and
receive a response message returned by the AMF entity/MME.

67. The device according to claim 63, wherein the node is a core network node, and the processor is specifically configured to:
receive the message requesting to use the L-LMF as the new LMF entity sent by the AMF entity/MME.

68. The device according to claim 67, wherein the processor is specifically configured to:
send the response message carrying the undergoing related location service flow to the AMF entity/MME.
